# EUROPEAN PATENT SPECIFICATION

(11) **EP 2 839 186 B1**
(45) Date of publication and mention of the grant of the patent: **04.01.2017**
(21) Application number: 13725262.3
(22) Date of filing: 15.04.2013
(51) Int. Cl.: F16H 29/04

(54) **ROTOR CONTROLLED CVT**
ROTOR GESTEURTES STUFENLOSES GETRIEBE
TRANSMISSION A VARIATION CONTINUE A COMMANDE PAR ROTOR

(30) Priority: 16.04.2012 ZA 201202736; 22.08.2012 ZA 201206309; 17.10.2012 ZA 201207778; 11.02.2013 ZA 201301084
(43) Date of publication of application: 25.02.2015
(73) Proprietor: Varibox IP (PTY) Limited, 2194 Randburg (ZA)
(72) Inventor: NAUDE, Johannes, Jacobus, 2194 Randburg (ZA)
(74) Representative: Patentanwälte Ruff, Wilhelm, Beier, Dauster & Partner mbB
(86) International application number: PCT/ZA2013/000024
(87) International publication number: WO 2013/159126

(56) References cited:
- WO-A1-82/02233
- WO-A1-90/06456
- WO-A1-2004/072511
- WO-A1-2009/092120
- DE-A1-102009 030 978
- JP-A- H01 193 435
- US-A- 5 390 558

## Description

### BACKGROUND OF THE INVENTION

This invention relates to a rotor controlled (RC) continuously variable transmission (CVT) of the general kind described in the specifications of WO2004072511 ("D1") and WO2009092120 ("D2").

WO-A-2009/092120 discloses a rotor controlled continuously variable transmission having the features of the preamble of claim 1.

D1 and D2 describe a RCCVT which has a number of characteristics which can impact on the manufacturing cost and the size of the CVT. These are referred to briefly hereinafter.

### Backlash in rotor position

In the RCCVT of D1 and D2 the rotor is subjected to an alternating radial force as well as an alternating axial force during operation under load. If backlash exists in the rotor positioning system the rotor tends to oscillate in the axial direction so that it can take up the backlash as the axial force changes direction. During this axial oscillation, impact loads, created as the backlash distance is closed, create a high strain on the various components and lead to vibration. To address this problem a high precision positioning system with no backlash is required.

### Backlash in rotor follower guides

The resultant forces on the rotor follower units, in the axial direction of the rotor, also alternate. Any backlash that exists in the radial operating direction has a similar effect to rotor backlash in that it gives rise to impact loads which place a high strain on components in the RCCVT and can lead to vibration. Backlash in the rotor follower units can be eliminated by manufacturing various components to very tight tolerances but this has a significant effect on the manufacturing cost of the RCCVT.

### Inertia and torsion bars

The RCCVT in D1 and D2 makes use of torsion bars to ensure that the rocker arms, rotor followers and rotor surface are always in contact with one another. The inertia of the rocker arms and rotor followers should be minimized to curtail the diameter and length of the torsion bars so that the input speed of the rotor is compatible with the input speed of an automotive engine, typically of the order of 6500rpm.

### Design envelope and weight

The size and weight of the RCCVT in D1 and D2 are of critical importance if the RCCVT is intended for an automotive application. The length of the torsion bars is crucial if the bars are to be housed inside a limited space which is available in a vehicle. The oscillating inertia of the rocker arms and rotor followers directly affect the diameter and length of the torsion bars. If the RCCVT is to be of a size and shape which are commercially and technically acceptable then the design of the RCCVT must be such that it complies with strict specifications.

### One-way clutches

A conventional one-way clutch or sprag clutch of the kind used in an automatic automotive transmission cannot operate effectively in lock-unlock cycles of 108 Hz which corresponds to 6500rpm. This characteristic limits the maximum rotor input speed. Consequently, the kind of engine which can be coupled directly to the rotor is prescribed. Alternatively, use must be made of a reduction gearbox between the engine and the rotor. The resulting increase in the rotor input torque calls for stronger rotor followers and rocker arms which increase the inertia of these components and, consequently, larger torsion bars are required.

### Hill-holding

The RCCVT in D1 and D2 has an inherent hill-holding capability and a vehicle in which the RCCVT is installed does not roll backwards when brought to a standstill on a hill. The one-way clutches lock and prevent reverse rotation of the vehicle's wheels.

A reverse gear is typically implemented between the one-way clutches and the wheels and thus, if a vehicle is at a standstill on a hill and the one-way clutches are locked, a problem arises since all the components between the one-way clutches and the wheels are under load. Disengagement of a forward gear must be done under load and reverse must be selected. If a clutch of the kind usually employed in a manual transmission is used between the one-way clutches, then the torque rating of that clutch would be higher by a factor of about 4 compared to a manual transmission clutch of a similar size vehicle. This is because the inherent reduction factor of the RCCVT between the rotor and the one-way clutches is typically a minimum of 4. An inclusion of the manual transmission clutch adds weight, cost and expense to a practical implementation of the RCCVT.

### Equal angles to minimize ratio change power

In D2 the actuation power is reduced by ensuring substantially equal angles above and below the normal of a contact line between the rotor and rotor followers in order to lower the axial force on the rotor. This is effective but it imposes restrictions, on the rotor design, which create conditions which promote backlash.

### Equal circumference to minimize rotor follower speed difference

In D2 the circumference of the rotor is substantially constant in order to minimize the speed difference, along the line of contact, between the rotor and the rotor follower. Slide friction along this line is then reduced. This is an effective feature but it does impose restrictions, on the rotor design, which creates conditions which promote backlash.

### SUMMARY OF THE INVENTION

The invention provides a rotor controlled continuously variable transmission (RCCVT) which includes:
an input shaft (30) which is mounted for rotation about a longitudinal axis (LA), a rotor (28) which is attached to the input shaft (30), which is rotatable together with the input shaft (30), and which is axially movable relative to the input shaft (30),
the rotor (28) including a high ratio end (HR) with a minimum radius, from the longitudinal axis (LA), of Rmin_h, a geared neutral end (GN) with a minimum radius, from the longitudinal axis (LA), of Rmin_gn, an outer surface (OS) between the high ratio end (HR) and the geared neutral end (GN), and a minimum radius R from the longitudinal axis (LA) to the outer surface (OS) between the high ratio end (HR) and the geared neutral end (GN),
a first rotor follower unit (16A) with at least one rotor follower bearing (114A) with a first contact surface (CS1) which is in contact with said outer surface (OS),
a second rotor follower unit (16B) with at least one rotor follower bearing (114B) with a second contact surface (CS2) which is in contact with said outer surface (OS),
an output transmission (20), and
first and second rocker arm units (14A, 14B) for respectively transmitting rotational drive from the rotor follower units (16A, 16B) to the output transmission (20),
wherein
(i) the minimum radius R increases linearly from Rmin_h to Rmin_gn over the length of the rotor (28) from the high ratio end (HR) to the geared neutral end (GN) whereby forces caused by the rotor follower units (16A, 16B) on the rotor (28) have a resultant component (Fa) on the rotor (28), in the direction of the longitudinal axis (LA), which is always in the axial direction (832) from the high ratio end (HR) to the geared neutral end (GN), and
(ii) said first contact surface (CS1) and said second contact surface (CS2) respectively remain in line contact with said outer surface (OS) of the rotor (28).

Further according to the invention the RCCVT may be distinguished by the following:
i. a center-point of said line contact of said first contact surface (CS1) with said outer surface (OS) is B1 ,
ii. a center-point of said line contact of said contact surface (CS2) with said outer surface (OS) is B2,
iii. the first rocker arm unit (14A) includes a roller (152A) which is rotatable about an axis RA1 and is pivotal about an axis RAU1 which is spaced from the axis RA1 by a distance Ra, and the distance between RAU1 and B1 , in the direction of the longitudinal axis LA, is L2.
iv. the second rocker arm unit (14B) includes a roller (152B) which is rotatable about an axis RA2 and is pivotal about an axis RAU2 which is spaced from the axis RA1 by a distance Ra, and the distance between RAU2 and B2, in the direction of the longitudinal axis LA, is L2,
v. the spacing between RAU1 and RAU2 is H and wherein:
vi. L1, L2, Ra and H are such that forces on the rotor follower units (16A, 16B) have respective resultants Fx1, Fx2 in the direction of the longitudinal axis LA, which are always in the axial direction (832) from the high ratio end (HR) to the geared neutral end (GN), whereby the rotor follower units (16A, 16B) are continuously biased in the direction (832).

According to the invention the RCCVT includes a first torsion bar (200A) with a first end (200A1) and a second end (200A2), a second torsion bar (200B) with a first end (200B1) and a second end (200B2), wherein the first end (200A1) of the torsion bar (200A) is connected to the rocker arm unit (14A), the first end (200B1) of the torsion bar (200B) is connected to the rocker arm unit (14B), a pushrod unit (230) connected to the second end (200A2) of the first torsion bar (200A) and to the second end (200B2) of the second torsion bar (200B), and an actuator (228) which, in response to the axial position of the rotor (28), causes actuation of the pushrod unit (230) to match the required torque on the rocker arm units (14A, 14B) with the torques produced by the torsion bars (200A, 200B).

Preferably the actuator (228) establishes a non-linear relationship between the torque produced by the torsion bars (200A, 200B) and said axial position of the rotor (28).

Preferably the output transmission (20) includes a drive gear unit (910), a one-way clutch gear (924) meshed with the drive gear unit (910), and a plurality of rollers (954) and associated saddles (956) for imparting rotational drive to the one-way clutch gear (924), wherein for each roller and associated saddle, the roller (954) has an outer surface which in plan includes a first circular arc (954.1), an opposed second circular arc (954.2), a planar surface (954.3) which connects an end of the first circular arc to an end of the second circular arc, and a connecting surface between a second end of the first circular arc and a second end of the second circular arc, wherein the connecting surface includes a freewheel surface (920) adjacent the second end of the second circular arc which is curved in an opposite sense to the curvature of the second circular arc, a tip (968), and a cavity (954.4) between the tip (968) and the second end of the first circular arc, and wherein the saddle (956) in plan has an inner surface (960) which has the same radius as the radius of the outer surface (168) of the respective rocker arm unit (14), an outer surface (962) which is concentric with the inner surface (960) and which has the same radius as said freewheel surface (920) and an end stop (964) which projects from the outer surface (962), the end stop including a limiting surface (966), and a biasing element (999) which acts between the planar surface (954.3) of the roller and the one-way clutch gear and wherein, in a freewheel position, the inner surface (960) is in sliding contact with the outer surface (168) and the saddle (956) is positioned with its limiting surface (966) against the roller tip (968) and, in a locked position, the roller tip (968) is displaced from the outer surface (962) and is in contact with the limiting surface.

Preferably radial movement of the centre points B1 and B2 from the longitudinal axis LA is converted in a linear fashion to angular displacement of the rocker arm units 14A and 14B about the respective axes RAU1 and RAU2.

### BRIEF DESCRIPTION OF THE DRAWINGS

The invention is further described by way of examples only with reference to the accompanying drawings in which :
Figure 1 is a perspective view of a rotor controlled continuously variable transmission (RCCVT) according to one form of the invention,
Figure 2 is a perspective view of the RCCVT from a different side compared to Figure 1 and with a casing removed,
Figure 3 is a side view in section through a rotor,
Figure 4 contains several views of the rotor,
Figure 5 has a number of views, from different sides, of a rotor follower unit,
Figure 6 has a number of views, from different sides, and a cross-sectional view, of a rocker arm unit,
Figure 7 illustrates in perspective the RCCVT connected to various components,
Figure 8 is a view in cross-section of a component shown in Figure 7 in the direction of an arrow 8,
Figure 9A has two exploded views in perspective, from opposing sides, of a slider block,
Figure 9B includes a number of different views of a pushrod,
Figure 10 is similar to Figure 8 with pushrod lever units in a lower extreme position (Figure 8 shows the push rod lever units in an upper extreme position),
Figures 11A and 11 B are two views in perspective, in different directions, of a torsion bar,
Figure 11C is a diagram of a third order system,
Figure 12 has two exploded views in perspective in different directions of a pushrod lever unit,
Figure 13 is similar to Figure 7 and illustrates in perspective the RCCVT in a geared neutral position but with a casing removed,
Figure 14 contains three views of a drive gear unit namely, a view in elevation, a view from one side in cross-section, and a view on an enlarged scale of part of the drive gear unit,
Figure 15 is an exploded view of the drive gear unit of Figure 14 and of a roller unit,
Figure 16 has two views in perspective, in different directions, of an output gear unit, a two-speed unit and a final drive unit,
Figure 17A is a view in cross-section of the output gear unit taken in the direction of an arrow 17 in Figure 16,
Figure 17B illustrates in perspective an output shaft and components attached to it,
Figure 18 has two exploded views, in different directions, of a manual selector arrangement,
Figures 19A, 19B, 19C and 19D show different operational positions of a manual selector arrangement,
Figure 20 has a side view and a view in cross-section of the rotor,
Figure 21 is a graph illustrating the variation of an angle between the rotor axis and a contact line between rotor follower bearings and the rotor, for rotation of the rotor through 360°,
Figure 22 is a perspective view of the RCCVT with a side cover removed,
Figure 23 is a view in cross-section of the rotor taken on its axis, in the direction of an arrow marked 23 in Figure 1,
Figure 24 is a cross-sectional view of the RCCVT, through a central plane of an attachment block, in the direction of an arrow marked 24 in Figure 1,
Figure 25 is similar to Figure 24 and is a cross-sectional view through the central plane of the attachment block, in the direction of the arrow 8 in Figure 7, with two pushrod lever units in a central position,
Figure 26 has two views in perspective, in different directions, of a main casing of the RCCVT,
Figure 27 is a graph depicting parameters of a third order system,
Figure 28 is a graph of disengagement parameters relating to a rocker arm unit and a one-way clutch gear,
Figures 29A, 29B and 29C show constructional aspects of a modified slider block,
Figures 30A, 30B and 30C show constructional details of a drive gear unit which is in a freewheel position,
Figures 31A and 31B show different aspects of the drive gear unit in Figure 30A, in an engaged position, and
Figures 32A and 32B show a modified roller.

### DESCRIPTION OF PREFERRED EMBODIMENTS

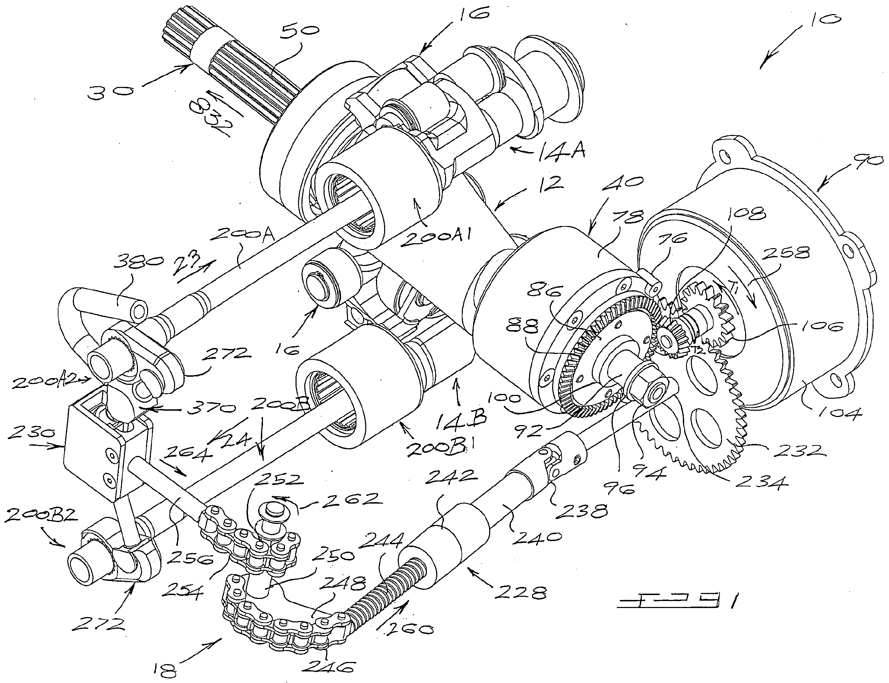

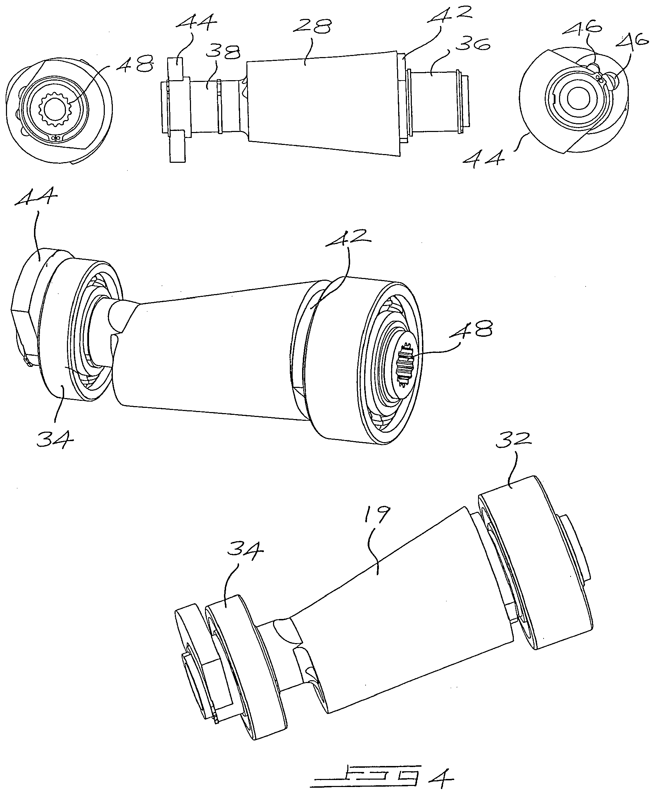

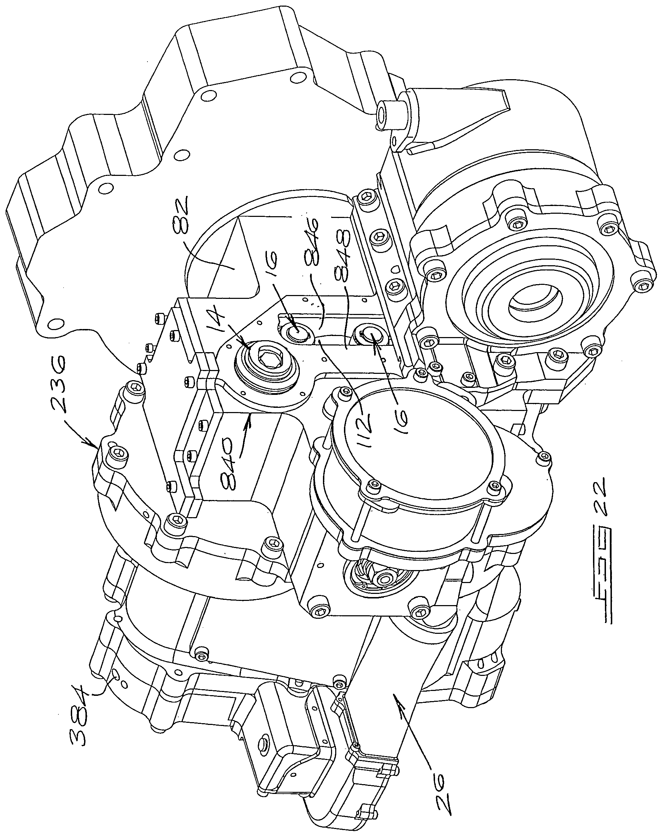

Figures 1 to 28 of the accompanying drawings illustrate aspects of a RCCVT 10 according to the invention which includes a rotor unit 12, two rocker arm units 14A, 14B, two rotor follower units 16A, 16B, a pushrod adjustment system 18, an output gear unit 20, a two-speed unit 22 and a final drive unit 24. A casing 26 houses the various components (Figure 22).

In the ensuing description various components in the RCCVT which are duplicated are distinguished from each other, when necessary, by the use of the suffixes A and B.

The rotor unit 12 (see Figures 1, 2, 3 and 4) includes a rotor 28, an input shaft 30 with a longitudinal axis LA, a front rotor bearing 32 and a rear rotor bearing 34 which are mounted on a rotor front shaft 36 and a rotor rear shaft 38 respectively, and a ball screw unit 40 which is mounted on an outer side of the rear rotor bearing 34. The rotor 28 has a front counterweight 42 and a rear counterweight 44 respectively attached to the front shaft 36 and the rear shaft 38. Holes 46 are provided in the body of the rotor 12, extending generally in the axial direction, in such a way that the rotor unit 12 can be statically and dynamically balanced.

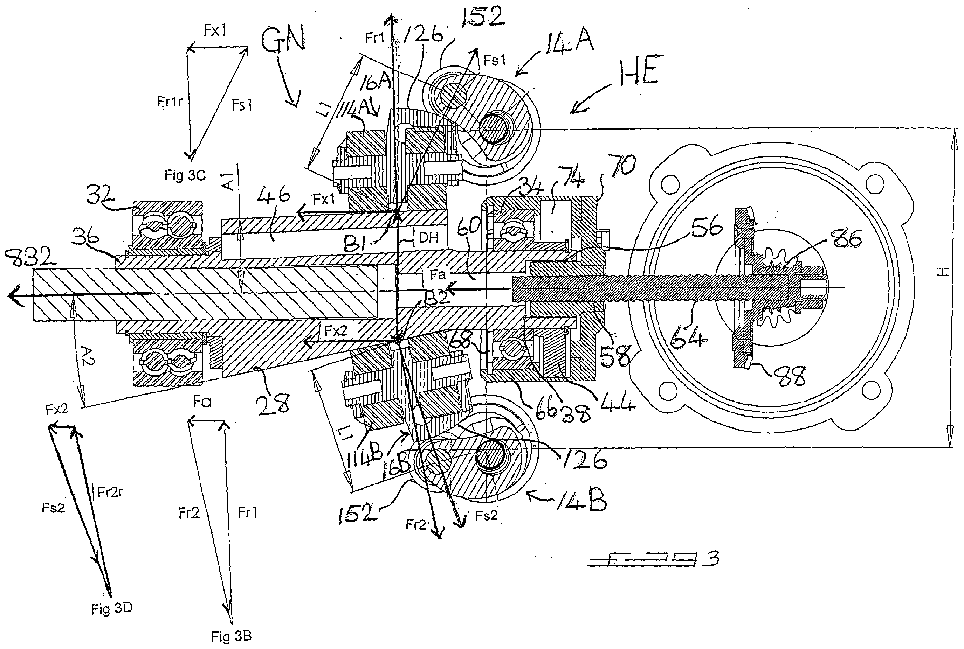

The rotor 28 has an outer surface OS. On a front end the rotor 28 has a splined centre bore 48 which mates with external splines 50 of the input shaft 30 so that the input shaft can drive the rotor while still allowing the rotor to move axially. A rear end of the rotor 28 has a central bore 56 which is large enough to clear a ball screw nut 58 (see Figure 3) followed by a smaller central bore 60 which is large enough to clear a shaft 64 of the ball screw.

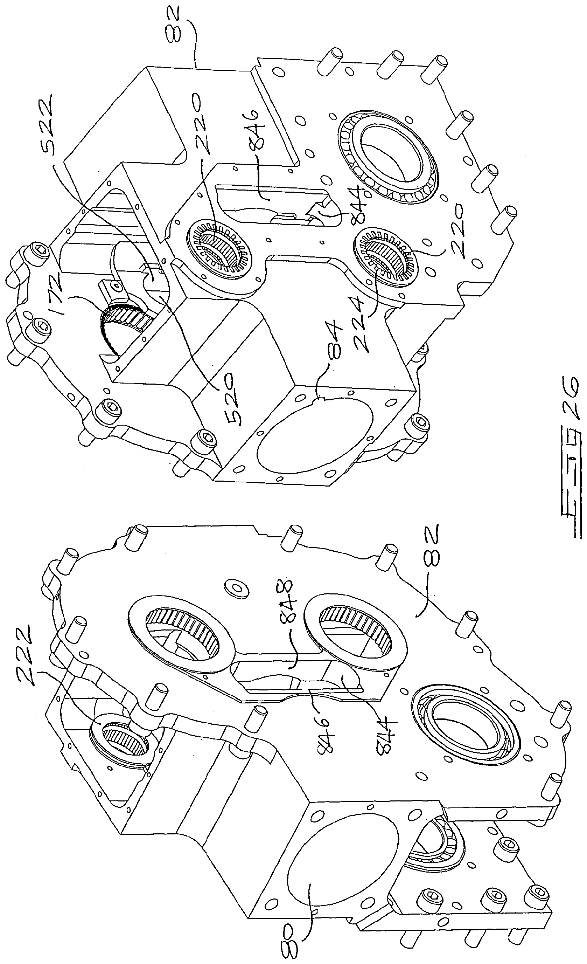

The ball screw unit 40 (see Figure 3) includes a tubular body 66. The rear rotor bearing 34 is located at a front end of the body by means of a C-clip 68, a circular cap 70, the ball screw nut 58 and the ball screw shaft unit 64. The body 66, towards a rear end, has a circular cavity 74 in which the counterweight 44 can freely rotate. The cap 70 is bolted to the body 66 by means of countersunk screws positioned on its rim, with the ball screw nut 58 attached in its centre. The cap 70 also has a semi-circular protrusion 76 on its rim which extends beyond an outer surface 78 of the body 66. The surface 78 mates with a central bore 80 of a main casing 82 (see Figure 26) so that the ball screw unit 40 can axially slide within the central bore 80 while the protrusion 76 engages with a mating groove 84 in the central bore 80 to prevent the ball screw unit 40 from rotating in the bore 80.

A hub 86 is attached to the ball screw shaft 64. A bevel gear 88 is attached to the hub 86 by means of countersunk screws which extend around its inner rim. The hub 86, at a rear end, includes a shaft 92 which has a threaded end whereby a nut 94 and a washer 96 locate a ball screw bearing between the nut 94 and a hub shoulder 100.

A ratio motor unit 90 has an electric ratio motor 104 which carries a spur gear 106 and a pinion bevel gear 108 attached to its shaft. The bevel gear 108 mates with and drives the bevel gear 88.

The front rotor bearing 32 is axially slidable in the central bore 80 to allow the rotor unit 12 to be axially movable via the ratio motor unit 90 which drives the ball screw shaft 64 which, in turn, axially positions the ball screw nut 58 with which it is engaged.

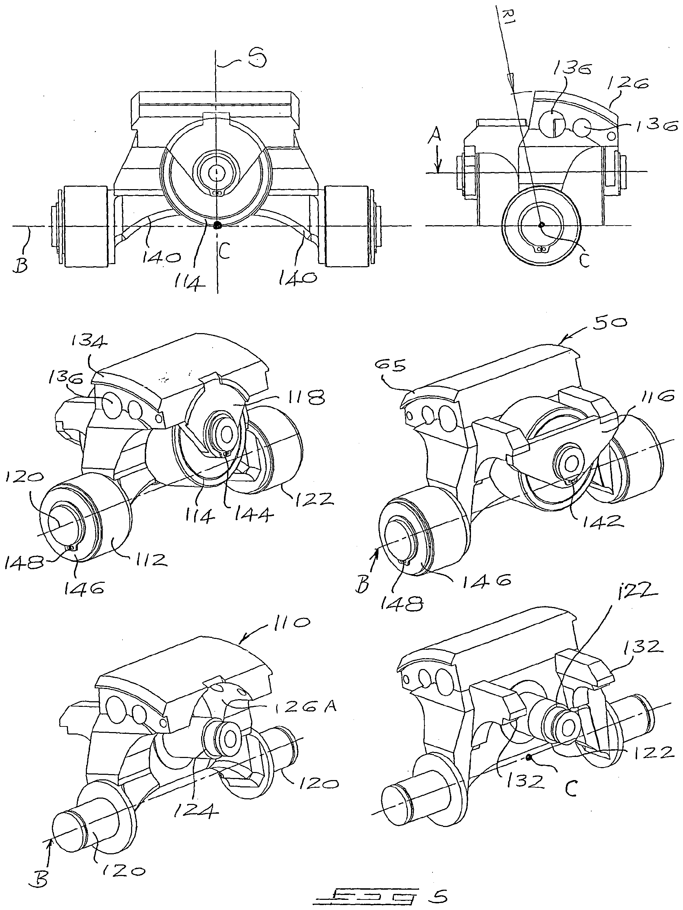

Each of the rotor follower units 16 (see Figure 5) includes a follower body 110, two slot follower bearings 112, two rotor follower bearings 114, a front cap 116 and a rear cap 118.

The follower body 110 is symmetrical about a plane S and includes two side projecting formations which end in two shafts 120 which are central to an axis B, a forwardly projecting shaft 122 and a shaft 124 which projects rearwardly. The shafts 122 and 124 are central to an axis A and are perpendicular to the axis B. A semi-circular curved section 126 is central to the axis B and has a radius R1. The curved section 126 leans more towards the rearwardly projecting shaft 124 and includes a circular cut-out 126A beneath it, and two front projecting arms 132.

Edges of the curved section 126 include chamfers 134. The body 110 includes holes 136 which are perpendicular to the plane SA, for mass reduction purposes. The axis A, which is perpendicular to the axis B, lies in the plane S which is perpendicular to the axis B.

A lower end of the body 110 includes chamfered cut-outs 140 which extend above the bearings 114. The front cap 116 is inserted into a step in the arms 132 and is located around the shaft 122 in order to support forces acting on the shaft in the direction of the arms 132. The cap is held in place by means of a C-clip 142.

The rear cap 118 is inserted into the cut-out 126A and is located around the shaft 124 to support forces acting on the shaft 124 in the direction of the cut-out 126A. The rear cap is held in place by means of a C-clip 144.

A first rotor follower bearing 114 is rotatably sandwiched between the front cap 116 and the body 110 and is located on the shaft 122. The second rotor follower bearing 114 is rotatably sandwiched between the rear cap 118 and the body 110 and is located on the shaft 124. Each shaft 120 projects to one side and carries a respective slot follower bearing 112, a retaining washer 146 and a C-clip 148 which is engaged with a C-clip groove at an end of the shaft 120. The positions of the bearings 114 are such that their outer surfaces are tangential to the axis B. A point C is defined by an intersection of the axis B with the plane S. The bearings 112 and 114 may be of the cam follower type or needle bearings.

The rotor follower units 16 are designed using finite element analysis techniques in order to minimize weight and inertia while still being capable of withstanding the forces and cycles arising during operation.

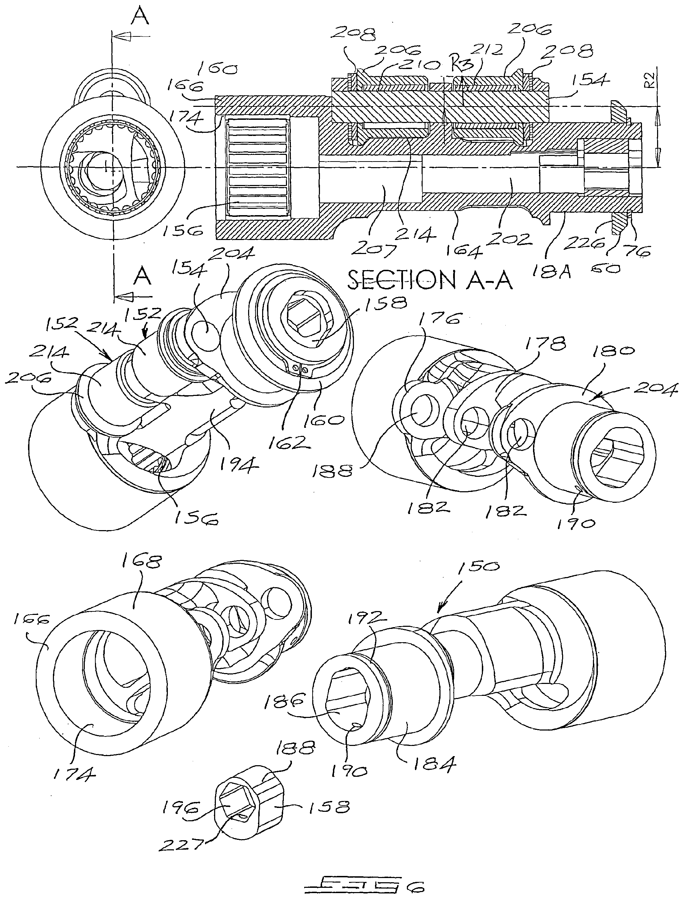

The rocker arm unit 14 (Figure 6) includes a rocker body 150, two rocker rollers 152, a roller shaft 154, a needle bearing 156, a torsion bar driver 158, a retainer ring 160 and a C-clip 162.

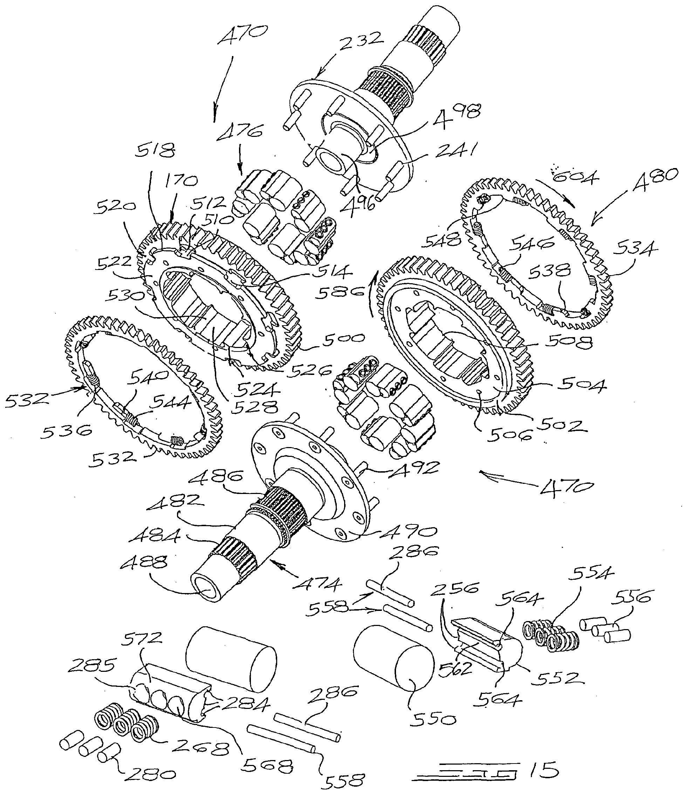

The rocker body 150 includes a hollow tube-like structure 164 with a front extended tubular section 166. An outer surface 168 provides a working surface for engagement with a one-way clutch gear 170 (Figure 15) and for engagement with a needle bearing 172 (Figure 26). An inner surface 174 locates the needle bearing 156. A central section includes a first holed lug 176, a second holed lug 178 and a third holed lug 180 attached to the hollow tube-like structure 164. Holes 182 in the lugs are concentric and of the same diameter.

An end tubular extension 184 which is concentric with the outer surface 168 and with an inner surface 186, is shaped to mate with an outer shape 188 of the torsion bar driver 158. The extension 184 has a hole 190 and a C-clip groove 192 at an end.

The retainer ring 160 is located on the tubular extension 184 and is axially located by means of the C-clip 162 which is located in the C-clip groove 192.

An underside of the rocker body 150 has a circular cut-out 194 which allows passage of the semi-circular curved section 126 of the rotor follower unit 16, during operation.

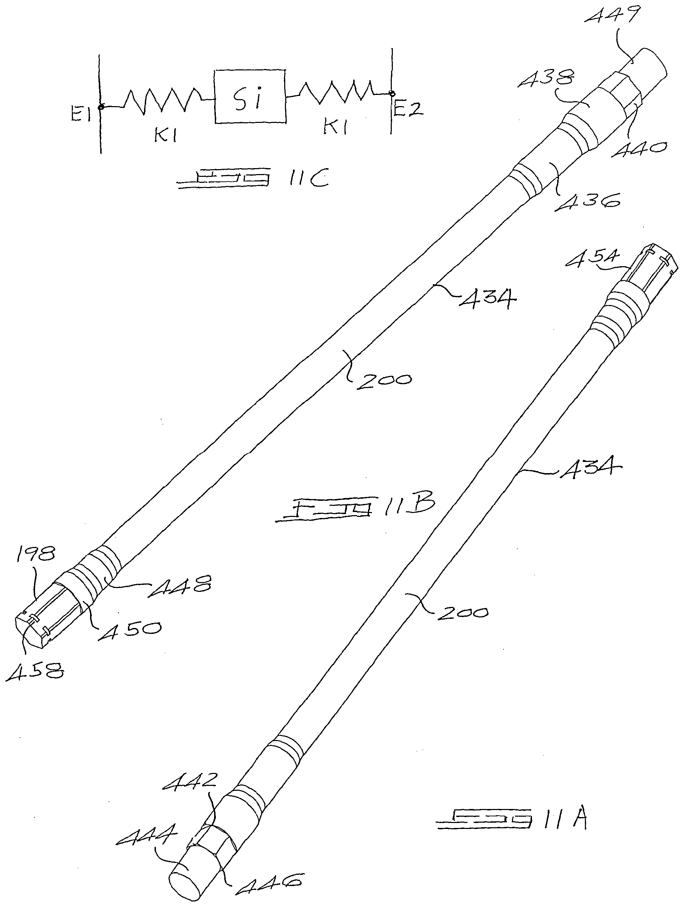

The torsion bar driver 158 has an inner shape 196 and is mated in a complementary manner with a six-sided extension 198 of a torsion bar 200 (see Figure 11). The rocker body 150 has a hollow stepped inner surface 202 which allows assembly and operation of the torsion bar 200, and also reduces weight and inertia.

The roller shaft 154 is located in the holes 182 of the lugs 176 to 180. An end of the shaft 154 is flush with an outer surface 204 of the lug 180. The rocker rollers 152 are each of radius R3, and each includes a chamfered rim 206 at one end which is located against a needle thrust bearing and thrust washer 208 and a needle bearing 210. Needles of the bearing 210 engage with an inner surface 212 of the rollers 152 and with the circular surface of the shaft 154.

An outer surface 214 of each roller 152 engages in line contact with the semi-circular curved section 126 of the rotor follower unit 16. The chamfered rims 206 engage with the chamfer 134 of the rotor follower unit 16 in order to locate the rotor follower unit 16 and the rocker arm unit 14 so that any forces, in both directions, acting in the direction of the axis B of the rotor follower unit 16, are transferred to the rocker body 150, via the chamfered rims 206 and from the rocker roller 152 to the rocker body 150 via the needle thrust bearing and thrust washer 208 (Figures 3 and 6). The rocker arm unit 14 is radially located, via the needle bearing 172, in the main casing 82, acting on an inner portion of the outer surface 168, and via a needle bearing 220, also located in the main casing 82, acting on a portion of the tubular extension 184 (see Figure 26).

The rocker arm unit 14 is axially and rotatably located via a thrust needle bearing and washer 222, in the main casing 82, acting on the outer surface 204 of the lug 180. Additionally, a needle bearing 224, also in the main casing 82, acts on a surface 226 of the retainer ring 160 (Figure 6). A grub screw (not shown) is located in the hole 190 and in a hole 227 in the torsion bar driver 158 to position the torsion bar driver inside the rocker body 150.

The two rocker arm units 14 are identical save for the fact that one rocker body 150 is a mirror image of the other. The dimensions of the radius R1 of the follower body 110, of the radius R3 of the rocker roller 152, and of the radius R2 of the centerline of the rocker roller 152 to the centerline of the rocker body 150 and the operating oscillation duration of the rocker arm unit 14, are such as to convert radial displacement of a point C of the rotor follower unit 16, from the axis LA, linearly into corresponding angular displacement of the rocker arm unit 14.

The rocker arm unit 14 is designed using finite element analysis techniques in order to minimize weight and inertia and to ensure that the rocker arm unit is capable of withstanding operational forces and cycles.

The pushrod adjustment system 18 (Figure 1) includes an actuation unit 228 and a pushrod unit 230.

The actuation unit 228 has a spur gear 232, mated with the spur gear 106, attached to a shaft 234. The shaft is located in two needle bearings in a casing 236 (Figure 22) and is attached to a universal joint 238 which is attached to a hollow shaft 240.

The shaft 240 is attached to a right hand ball screw nut 242 which engages with a ball screw shaft 244 attached to a chain section 246. A tooth cam 248 is on an intermediate shaft 250 which is attached to a chain sprocket 252 on a first end of a chain section 254. The opposing end of the chain section 254 is attached to a slider block shaft 256.

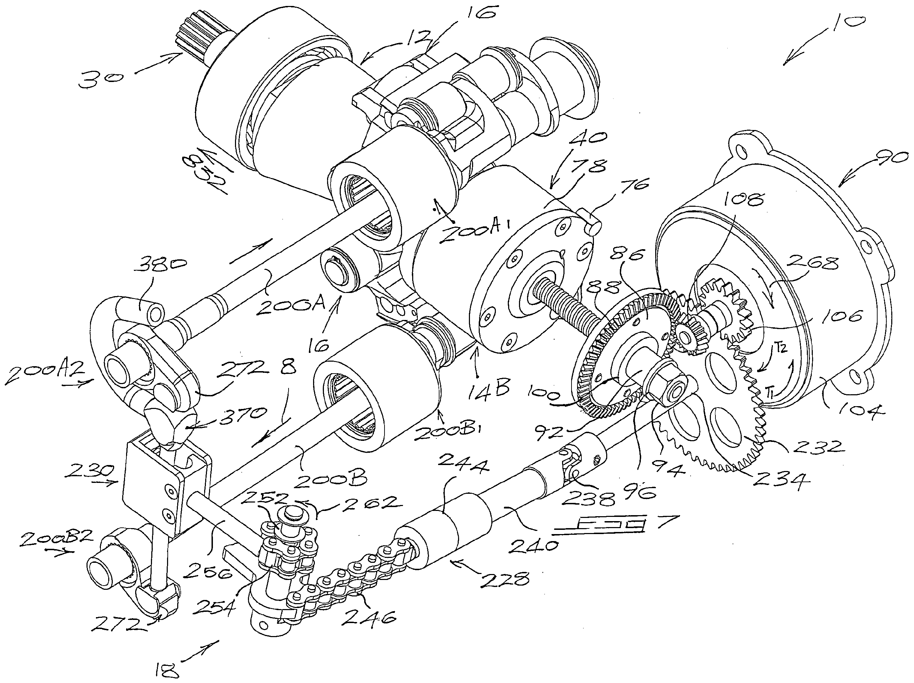

Upon rotation of the ratio motor 104, in the direction of an arrow 258, the spur gear 106 drives the spur gear 232 which in turn drives the ball screw nut 242. The ball screw shaft 244 is driven in the direction of an arrow 260 and the ball screw shaft 244 enters the hollow shaft 240. The chain section 246 is actuated over the cam 248 and in this manner the shaft 250 is rotated in the direction of an arrow 262. This causes movement of the slider block shaft 256 in the direction of an arrow 264. The extent of adjustment is between the positions of the components shown in Figure 1, to the positions of the same components shown in Figure 7.

The relationship of the angular displacement of the spur gear 106 to the displacement of the slider block shaft 256 is non-linear and is governed by the profile of the cam 248.

The pushrod unit 230 (Figures 1, 7, 8 and 9) includes a slider block 266, a pushrod connector 268, two pushrods 270, two pushrod lever units 272 and two torsion bars 200.

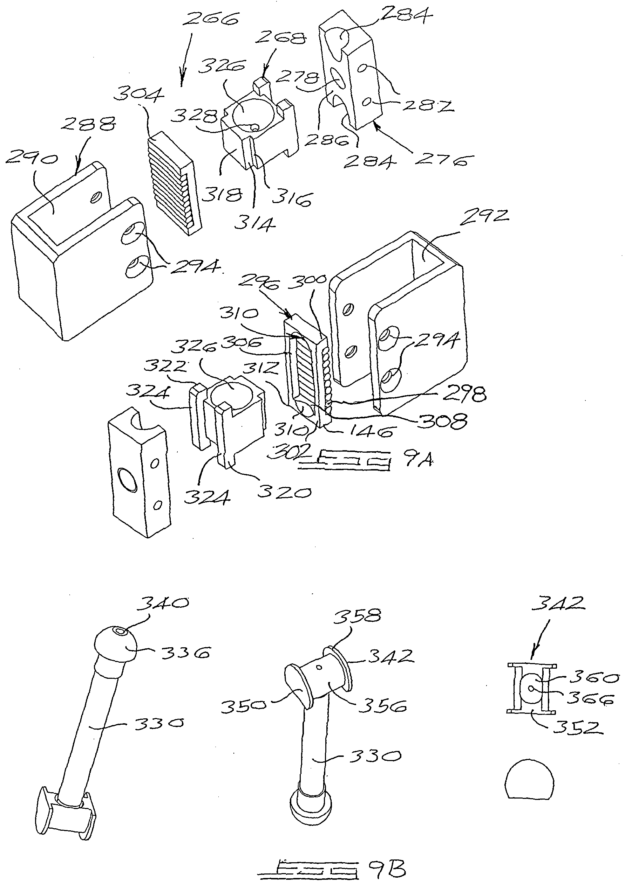

The slider block 266 (Figure 9A) includes an attachment block 276 with a rectangular body with a hole 278 in a front face to which a slider block shaft 256 is attached, two side holes 282, an angled circular cut-out 284 at each end, a rear surface 286, a guide block 288 which has a C-shaped body with two internal side faces 290, a base surface 292, countersunk holes 294 at an end of each side face 290 and a needle rack 296 with ten steel needles 298 positioned together at extended ends 300 of a rack 302.

The rack 302 has a framed rectangular body. The ends 300 extend upwardly and have end faces 304. The body has a center rectangular opening which forms faces 306 and 308, an angled circular cut-out 310 on inner faces of the rectangular opening and a front face 312.

The needle rack 302 is slidably located within the side faces 290 and the steel needles 298 are in line contact with the base surface 292. A small gap exists between the end face 304 and the base surface 292.

The pushrod connector 268 has a rectangular body with corner cut-outs which form faces 314, 316 and a base face 318, side faces 320, two feet structures 322 which extend on sides of the pushrod connector 268, forming base surfaces 324, and two outwardly facing hemispherical cut-outs 326 with an interconnecting hole 328.

The pushrod connector 268 is slidably located between the side faces 290 which are in contact with the faces 320. The base face 318 is in line contact with the steel needles 298. The components are dimensioned so that a small gap exists between the face 316 and the front face 312, between the faces 306 and 314, and between the base surface 324 and the rear surface 286. Thus the rack 302 "floats" on the steel needles 298. The only forces on the rack are those exerted by the needles. The sole function of the rack is to keep the needles together while they rotate.

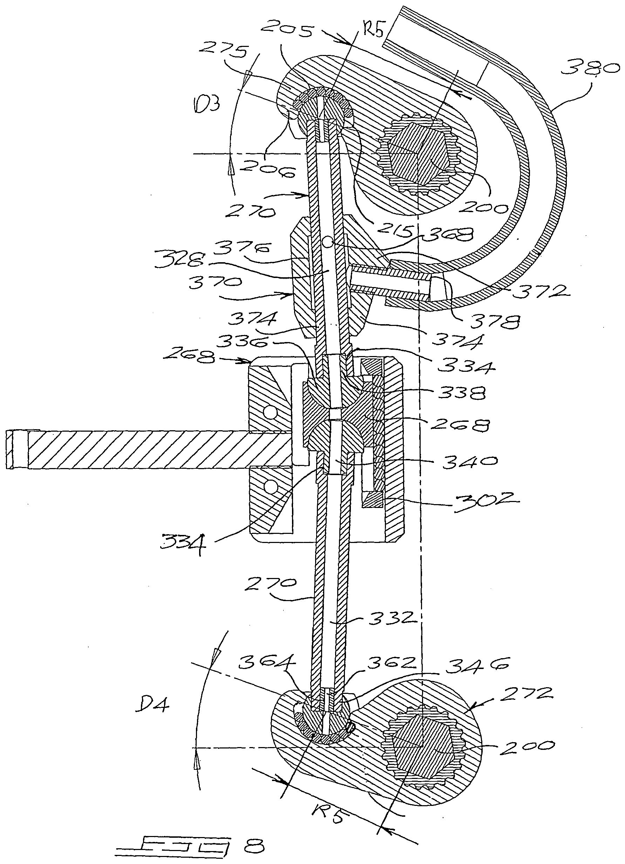

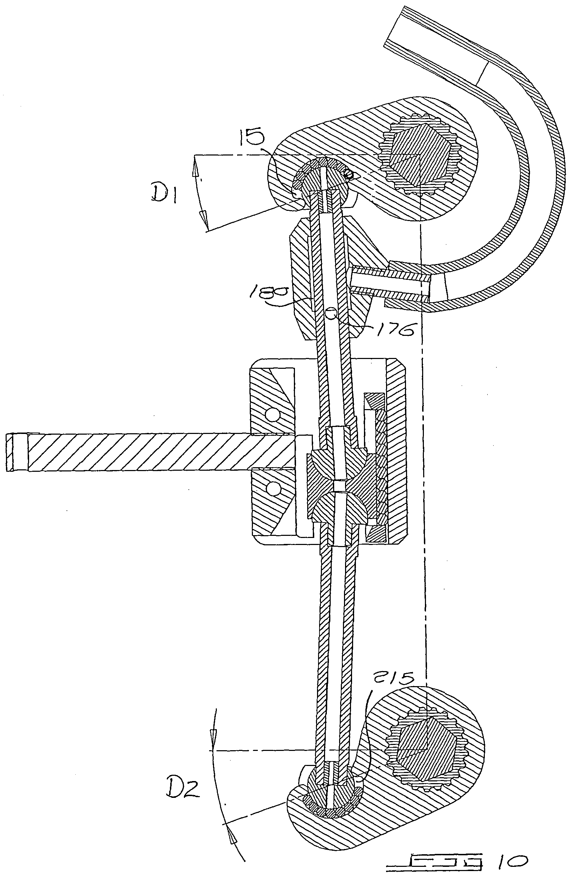

During operation the pushrod connector 268 rolls on the steel needles 298 which in turn roll on the base surface 292. The pushrod connector 268 is movable within the slider block 266, while also moving relative to the rack 302, with minimal friction. The resultant force on the pushrod connector 268 is always positive and perpendicular to the base surface 292. Extreme positions of this movement, occurring when the RCCVT is in a high ratio, are shown in Figures 8 and 10.

Each pushrod 270 (Figure 9B) includes a hollow pushrod shaft 330 with a shaft passage 332, an external and an internal step 334 into which a stepped hemispherical ball 336, with an extended end 338, fits (Figure 8). A hole 340 is concentric with the shaft passage 332. A lever actuator 342 is located over a step 346 on the pushrod 270.

The lever actuator 342 includes a semi-circular body with two outer faces 350, a bottom face 352, an internal semi-circular step which defines a curved surface 356, side faces 358, and a slotted hole 360 in a center of the bottom face 352 into which is located the step 346. An end of the pushrod shaft 330 is flush with the bottom of the slotted hole 360. The pushrod shaft 330 is movable to a limited extent in the slotted hole while the pushrod shaft remains perpendicular to the bottom face 352.

A cylindrical flow restrictor 362, which is press-fitted onto an end of the pushrod shaft 330, includes a center hole 364 with a diameter chosen to regulate oil flow through it. The lever actuator 342 includes a hole 366 in the center of the slotted hole 360 in order to feed oil from the flow restrictor 362 to the circular surface 356.

An upper pushrod 270 (in the drawing) also includes an oil hole 368 in the side of the pushrod shaft 330 and an oil feeder 370 (see Figure 8).

The oil feeder 370 has a body 372 with an internal bore 374 which slides over the pushrod shaft 330, a center section with an enlarged bore 376 connected to a pipe 378. The pipe feeds oil to the enlarged bore 374 which in turn feeds oil to the passage 332 via the oil hole 368. Oil is thereby fed to the circular surface 356 of the pushrod 270 which, at the time, is uppermost, and also to the circular surface 356 of the other pushrod 270 via the hole 328. A flexible rubber oil feeding pipe 380, attached to the pipe 378, provides the oil supply. One end of the pipe 378 is located in a hole of the casing 236. During operation the oil hole 368 remains within the enlarged bore 376. When the RCCVT is in a high ratio the oil hole 368 has an extreme position within the bore 376, as shown in Figures 8 and 10.

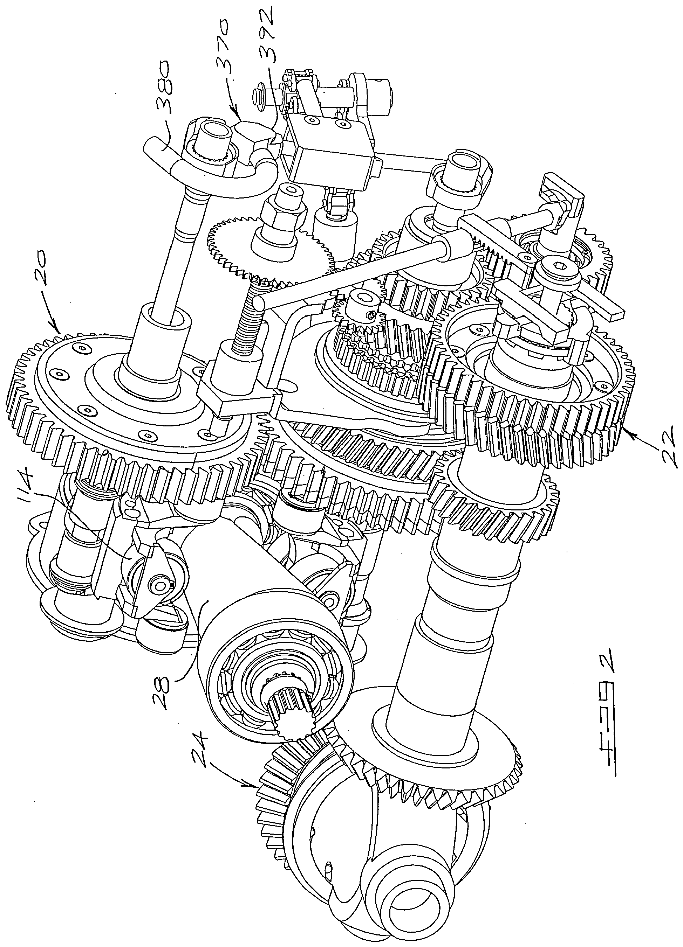

The oil feeder 370 has semi-circular side steps 392 (Figure 2) on both sides which slide along suitable faces in the casing 236 during operation of the RCCVT. A downwardly acting force created by the oil feeding pipe 380, which is bent, keeps the steps 392 in contact with the faces in the casing.

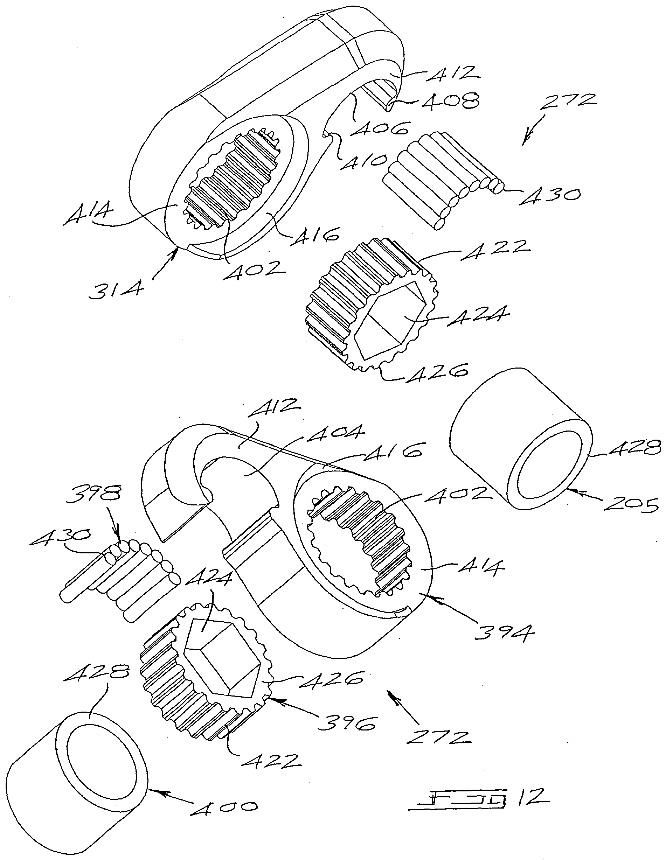

Each pushrod lever unit 272 (Figure 8 and Figure 12) includes a lever 394, a driver spline 396, a needle formation 398 and a sleeve 400.

The lever 394 has a circular body with an internal spline 402, elongated to one side to include a semi-circular actuation cavity 404 which has a circular portion 406, a first stop 408 and a second stop 410. The distance between the stops is slightly larger than the diameter of the circular surface 356. The width of the lever 394 is defined by side surfaces 412. An area around the internal spline 402 has a circular step which forms a small width around the spline 402 with faces 414. A transition from the side surfaces 412 to the faces 414 includes a chamfer 416.

The driver spline 396 has a circular body with an external spline 422 which is engaged with the internal spline 402 of the lever 394. A six-sided hole 424 is in the center of the external spline. The width of the driver spline 396, between two side faces 426, is equal to the distance between the faces 414 so that, in the assembled pushrod lever unit 272, the faces 414 and 426 are flush with each other.

The sleeve 400 is located concentrically with the driver spline 396 with one of its side faces 428 flush with one of the side faces 426.

The needle formation 398 includes needles 430. Each needle has a width equal to the distance between the surfaces 412. The needles, in the assembled RCCVT, are in line contact with the circular portion 406 and also with the circular surface 356 of the lever actuator 342. In this way the circular surface 356 is located concentrically with the circular portion 406 and defines a radius R5 (Figure 8) between the center of the driver spline 396 and the center of the circular surface 356. The spacing between the side faces 358 is slightly larger than the distance between the side surfaces 412 so that the lever actuator 354 can be rotatably located in the pushrod lever unit 272 and so that the side faces 358 locate the needles 430 rotatably between them.

The number of needles 430 is such that a gap 432 is formed which is large enough to provide rolling space for the needle formation 398 as the pushrod 270 rotates around the center of the circular surface 356 during operation of the RCCVT. The limits of this rotation are shown by positions of the respective components in Figures 8 and 10.

The gap 432 shifts from one side of the needle formation 398 to the other side while a transition is made from the limiting position shown in Figure 8 to the limiting position shown in Figure 10. This allows rotation of the pushrod lever unit 272 relative to the pushrod 270 with the components moving with a true rolling action. Frictional forces are therefore extremely low. The limits for the pushrod lever units 272 are defined by angles D1 to D4 which are relative to the horizontal in Figures 8 and 10. The angles D1 to D4 are substantially the same during operation of the RCCVT.

Each torsion bar 200 (Figure 11) has an elongate circular body 434 with a first circular step 436, and a second circular step 438 and a six-sided extension 440 with corners of the sides flush with the surface of the second step 438 to define a surface 442, a shaft extension 444, a surface 446, a first circular step 448, a second circular step 450 and the six-sided extension 198 which defines a surface 456 with a C-clip groove 458 at one end. The diameter transitions between the body 434 and the step 438, and between the body 434 and the step 450, are suitably radiused to provide smooth and gradual changes in accordance with good practice torsion bar design. The diameters and lengths of the body 434 and the steps 436 and 448 are optimized to provide a desired spring constant for the torsion bar 200.

The six-sided extension 440 is engageable with the six-sided hole 424 of the driver spline 396. The surface 442 and face 426 are flush with each other. The shaft extension 444 is located inside the sleeve 400 and the faces 428 and 446 are flush. The six-sided extension 454 is mated with the recess 196 (which is of complementary shape to the extension) of the torsion bar driver 158. The surfaces 456 are flush with the body of the torsion bar driver. A C-clip, not shown, positioned in the groove 458 locates the body of the torsion bar 200 within the rocker arm unit 14.

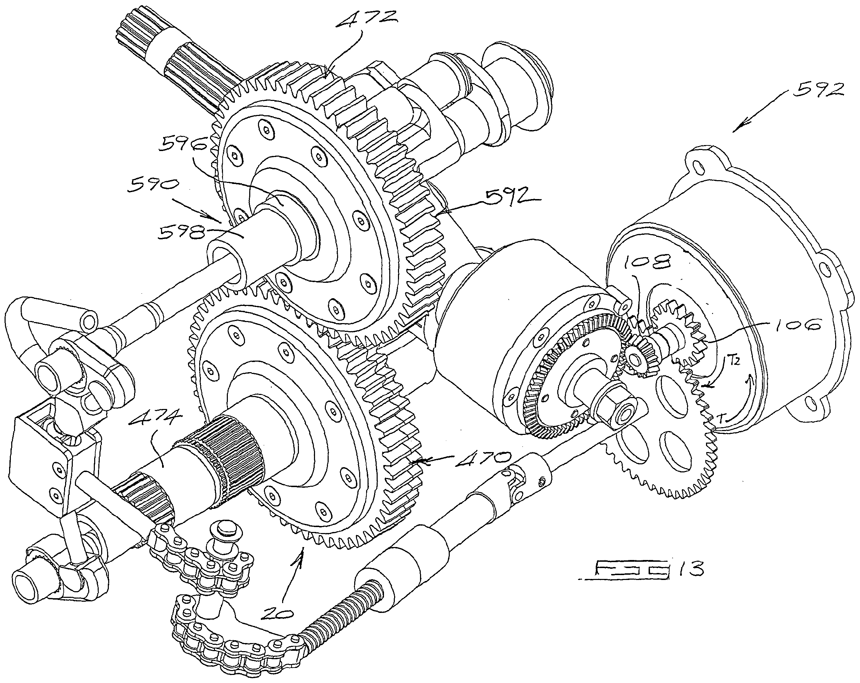

The output gear 20 (Figures 13 to 15) includes a drive gear unit 470 and a drive gear unit 472.

The drive gear unit 470 has an output shaft 474, eight roller units 476, the one-way clutch gear 170 and a backlash gear unit 480. The output shaft 474 has an elongate body 482 with external splines 484 and 486, a central bore 488, a flange 490 which has countersunk holes with screws 492 on its rim, a thrust bearing pocket 494 and a center shaft extension 496. The thrust bearing pocket 494 houses a thrust needle bearing with washers 498.

The one-way clutch gear 170 has a circular body with gear teeth 500 on an outer rim, a front rim 502 which forms a front face 504, eight concentric threaded holes 506, eight concentric cam formations 508 on an inner side, eight spring cavities 510 on a rear side, a groove 512 which extends to a base 514 of each spring cavity 510 and which defines a rim 518 and a face 520, an end face 522 and an extended face 524. Each concentric cam formation 508 has a rear cavity formation 526, a roller contact surface 528 and an end cavity formation 530.

The backlash gear unit 480 has a backlash gear 532 with a circular body, gear teeth 534 on an outer side which are identical to the gear teeth 500 and, on an inner side, cavities 536 and radial inner extensions 538, a step 540, a spring locator 542 and backlash springs 544.

The backlash springs 544 are compression springs. Each spring includes a respective groove hook 546 at one end.

The backlash gear 532 is positioned with a face 548 against the face 520 for orientating the radial inner extensions 538 to move through the spring cavities 510. The backlash gear 532 is then rotated relative to the one-way clutch gear 170 so that the steps 540 can slide into the groove 512.

The backlash springs 544 are then inserted into respective spring cavities 510 with each respective groove hook 546 in a groove 512. An opposed end of the spring is located around a respective spring locator 542. The one-way clutch gear 170 is attached to the output shaft 474 via the screws 492 which pass through the holes 506 so that the rim of the flange 490 is positioned inside the rim 502.

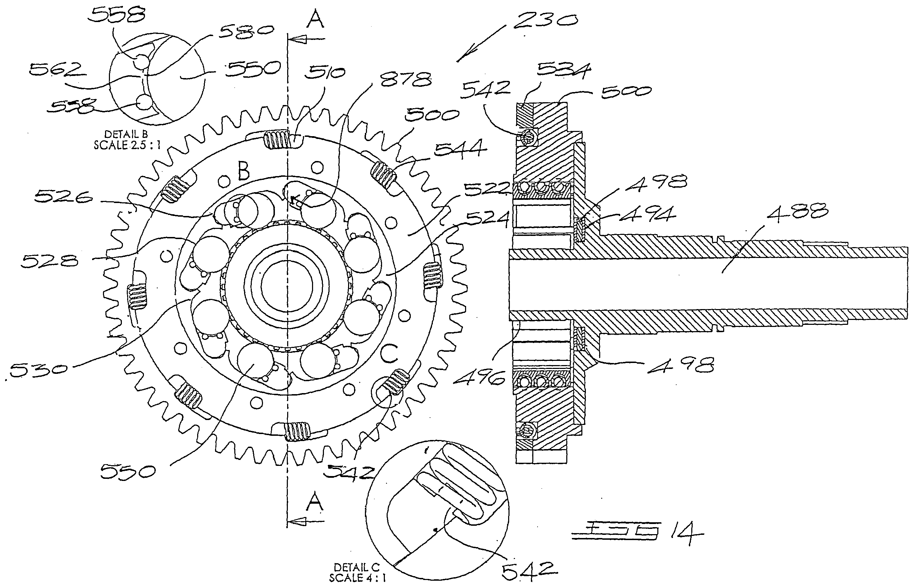

The roller unit 476 includes a roller 550, a spring holder 552, three compression roller springs 554, three resilient cylinders 556 and two resilient cylinders 558. The spring holder 552 has a front circular cut-out 562 and two smaller circular cut-outs 564. The springs 554 are respectively located inside three blind spring holes 568. An area 572 around each spring hole 568 is shaped in a complementary manner to a rear cavity formation 526 (Figure 14).

The cylinders 558 are positioned inside the circular cut-outs 564 and have respective cylindrical surfaces 286 extending beyond the circular cut-out 564. Ends of the cylinders are flush with sides of the respective spring holder 552.

Each resilient cylinder 558 is in line contact with a respective roller 550 and forms a gap 580 (Figure 14) between a surface of the roller and the circular cut-out 562.

Each resilient cylinder 556 is located inside a respective compression roller spring 554. The ends of the spring and of the cylinder are flush with the bottom of a respective blind spring hole 568.

The rollers 550 are in line contact with roller contact surfaces 528 as well as with the outer surface 168 of the rocker arm unit 14. The two resilient cylinders 558 are biased against the respective rollers 550 by means of the springs 554 which act between the spring holders 552 and the rear cavity formations 526. The outer surface 168 of the rocker arm unit 14 is located concentrically and is rotatable together, with the drive gear unit 470 via the mating of the shaft extension 496 with the needles of the needle bearing 156. The rocker arm unit 14 and the drive gear unit 470 are relatively rotatable via the engagement of a front of the extended tube section and the needle thrust bearing and washers 498.

Preferably the roller contact surface 528 is profiled so as to provide a constant strut angle for the roller 550 - in this respect reference is made to SAE article "Generalised Equations for Roller On-Way Clutch Analysis and Design". D.R. Chesney, J.M. Kremer, International Congress & Exposition, Detroit, Michigan, USA., February 24-27, 1997.

The output gear unit 20 can rotate relative to the rocker arm unit 14 under the torque which is created by the springs 554 when rotated in the direction of an arrow 586 relative to the rocker arm unit 14. However the output gear unit 20 is locked to the rocker arm unit 14 when turned in the opposite direction.

The drive gear unit 472 is substantially the same as the drive gear unit 470. However an output shaft 590 of the gear unit 472 only includes a step 596 and a shaft extension 598 instead of the elongate body 482 of the drive gear unit 470. The drive gear unit 472 has a one-way clutch gear 592 the gear teeth of which extend to the end face 522 and does not include spring cavities 510 nor a groove 512. The drive gear unit 472 has concentric cam formations which are mirror images of the cam formations 508 in the one-way clutch gear 170.

The one-way clutch gear 478 and backlash gear 532 are engaged and mated to the one-way clutch gear 592. The backlash gear 532 is first preloaded by turning it in the direction of an arrow 604 relative to the one-way clutch gear 478 (Figure 15). This action compresses the springs 544. The backlash gear 532 is then engaged with the one-way clutch gear 592. The preload torque created between the one-way clutch gear 592 and the one-way clutch gear 478, by this action, is larger than the drag torque created by the springs 554. This eliminates any backlash between the one-way clutch gear 592 and the one-way clutch gear 478 during operation of the RCCVT, when the drive gear unit 472 is freewheeling relative to the rocker arm unit 14 with which it is engaged via the rollers 550.

The gear teeth on the one-way clutch gears 478 and 592 and on the backlash gear 532 may be spur or helical gear teeth.

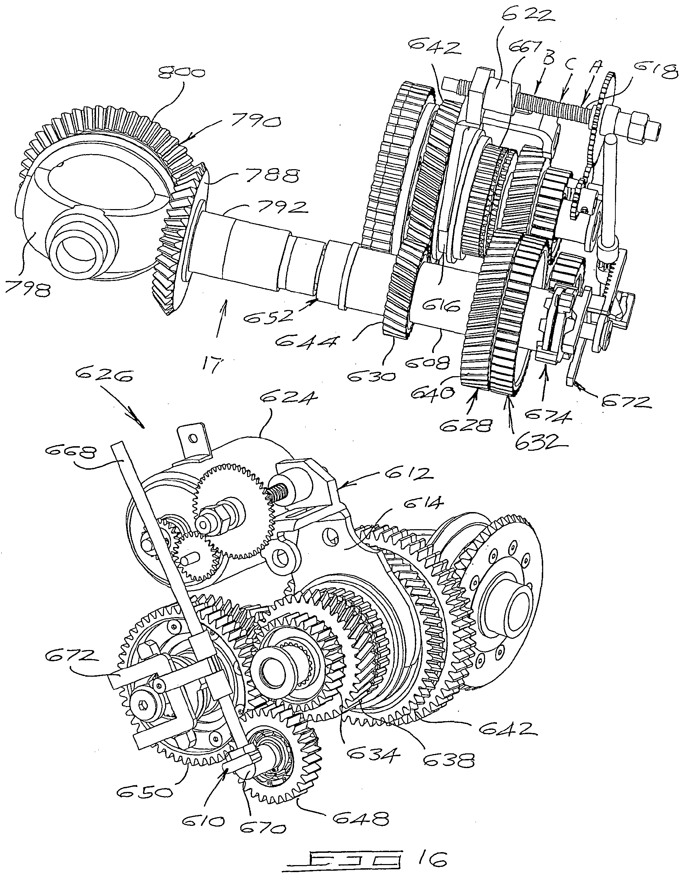

The two-speed unit 22 (Figure 16) includes a gearbox arrangement 608 and a manual selector arrangement 610.

The gear box arrangement 608 includes components which are similar to those found in a conventional automotive manual transmission and in an automated manual transmission to provide two forward ratios and a reverse ratio. In the ensuing description relevant components only are discussed. Components such as synchromesh rings, not mentioned, are generally similar to those found in automotive transmissions.

The arrangement 608 has a selector fork unit 612 which includes a fork 614 engaged with an engagement ring 616, a fork ball screw 618 which drives the fork 614 via a ball screw nut 622 which is attached to the fork, a gear selector motor 624 which drives the fork ball screw 618 via a gear train 626, a first ratio gear train 628, a second ratio gear train 630 and a reverse ratio gear train 632.

A gear 634 is attached to the output shaft 474 by mating splines in its bore with the splines 484 of the output shaft 474. Gears 638 and 642 are rotatably located on the output shaft 474.

The first ratio gear train 628 includes the gears 638 and 640 which are meshed and which create a first ratio equal to (number of teeth of gear 640) / (number of teeth of gear 638).

Similarly the second gear train 630 includes the gear 642 and a gear 644 and creates a second ratio equal to (number of teeth of gear 644) / (number of teeth of gear 642).

The reverse ratio gear train 632 includes meshing gears 634, 648 and 650 and creates a reverse ratio equal to (number of teeth of gear 650) / (number of teeth of gear 634). The gear 634 is attached to the output shaft 474 via the mating of splines in its bore with the splines 484 of the output shaft 474.

The gears 640, 644 and 650 are attached to one another via the gearbox output shaft 652 which includes a tubular body 654 with a center bore 656 which has an inner step 658 with a smaller bore at one end. At this end the body carries around its rim axially projecting formations 660 which have side faces 662. The output shaft 652 is rotatably located in the RCCVT via suitable bearings to act on circular surfaces 664 and 666 of the body 654.

The engagement ring 616 has internal splines which are slidably engaged with external splines of an engagement hub 667 which has splines in its bore which are, in turn, mated with splines 486 of the output shaft 474. This is similar to the situation which is encountered in an automotive manual transmission arrangement.

The fork 614 has three positions. In a first position, indicated by arrow A, the engagement ring 616 couples the gear 638 to the output shaft 474. In the second position, indicated by arrow B, wherein the fork 614 is in the position shown in Figure 16, the engagement ring 616 couples the gear 642 to the output shaft 474. In the third position, indicated by arrow C, the engagement ring 616 is not engaged with either of the gears 638 and 642, and the gears 638 and 642 can rotate freely, around the output shaft 474 thereby creating neutral, in a similar manner to what is encountered in a conventional automotive transmission system.

The reverse gear train 632 is engaged by moving the axially slidable idler gear 648 to mesh with the gears 634 and 650 while the fork 614 is in the third position (indicated by arrow C). Again this is in a way similar to that encountered in a conventional automotive transmission system.

The manual selector arrangement 610 (Figures 16 to 18) includes a selector shaft 668, a reverse unit 670, a lock actuator 672 and an axial lock 674.

The selector shaft 668 has a shaft 676 which is attached to a spur gear 678 which, in turn, is attached to a shaft 680 which includes a lever 682 with a front face 684 and a crank pin 686 at an end of the lever 682.

The lock actuator 672 has a C-shaped body 688 with identical cut-outs 690 which form three surfaces 692, 694 and 696 on legs of the body 688, outer faces 698, and a top face 702. The body, at a rear side, has a raised formation to which a rack 704 is attached. The teeth of the rack are meshed with the spur gear 678 to form a rack and pinion drive. The selector shaft 668 is rotatably located in holes in the casing of the RCCVT.

The reverse unit 670 includes the gear 648 which is rotatably attached to a reverse shaft 708 via a ball bearing 710 and suitable C-clips and grooves. The reverse shaft 708 has a shaft 712 which has an end formation 714 which forms a front face 716, and a rectangular body 718 with an elliptical cavity 720 which extends to one end in a slot 722. The reverse unit 670 is axially slidably located in holes in the casing 236.

During rotation of the selector shaft 668 the crank pin 686 engages with sides of the elliptical cavity 720 and the slot 722 to move the gear 648 axially into and out of engagement with the gears 634 and 650.

The axial lock 674 has a cam lock 726, a needle thrust bearing 728 and a lock driver 730.

The cam lock 726 has a circular body 734 with a center bore 736 and a rear face 738, two raised cams 740 with cam tips 742 which are spaced 180° apart on its front face 744, a side formation 746 adjacent each cam 740 including a spring blind hole 748, side surfaces 750 and two rearwardly projecting formations 752, 90° away from the cams 740, which include inward steps 754.

The lock driver 730 has a circular body 758 with a front face 760, a center splined bore 762 and rearwardly projecting angled formations 764 which define equal inner angled side faces 766 on sides of each formation 764. The formations 764 are on a diameter which is smaller than the diameter of the circular body 758 and define a rear rim face 768. The front face 760 has a raised rim which defines a circular surface 772 and a rim face 774.

In the assembled axial lock 674, needles of the needle thrust bearing 728 are engaged with the face 760 while its center is rotatably located around the circular surface 722. On the other side needles of the needle thrust bearing 728 engage with the rear face 738. The inner step 754 has a small gap between it and the rim face 768. The side faces 750 are slidably located in slots in the casing 236. The cam tips 742 are engaged with the cut-outs 690 while the lock actuator 672 engages with the casing 236 and is slidable in the direction of an arrow 776 due to the surfaces 698 and 702 sliding against suitable surfaces in the casing.

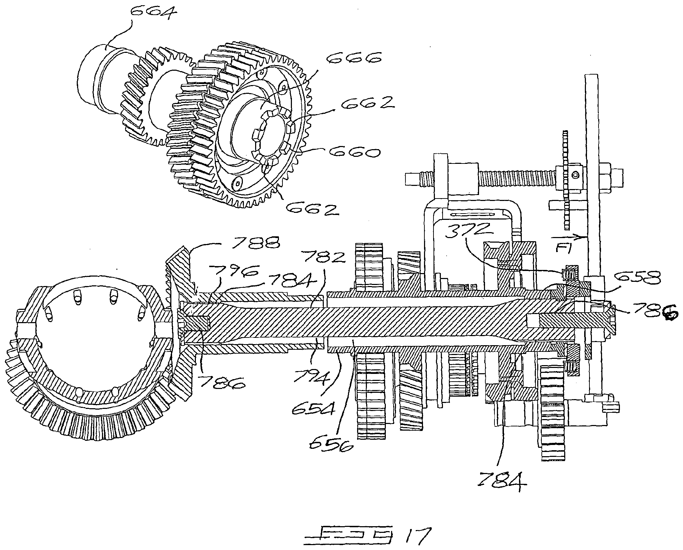

The final drive unit 24 (Figures 16 and 17) includes a drive shaft 782 which has large diameter ends 784 which is splined, threaded holes 786 at each end, a first bevel gear 788 and a differential unit 790.

The first bevel gear 788 has a tubular extension 792 with an internal bore 794 which includes a spline 796 at one end which is engageable with the splined end 784. Bearings, not shown, engage with the tubular extension 792 and rotatably locate the extension in the casing 236.

The differential unit 790 includes a differential 798 which has components similar to those required in an automotive differential (not shown). A bevel gear 800 which is attached to the differential meshes with the first bevel gear 788 to define the final drive ratio equal to (number of teeth of bevel gear 800) / (number of teeth of first bevel gear 788). The differential unit 790 is rotatably mounted by means of bearings, not shown, to the casing 236.

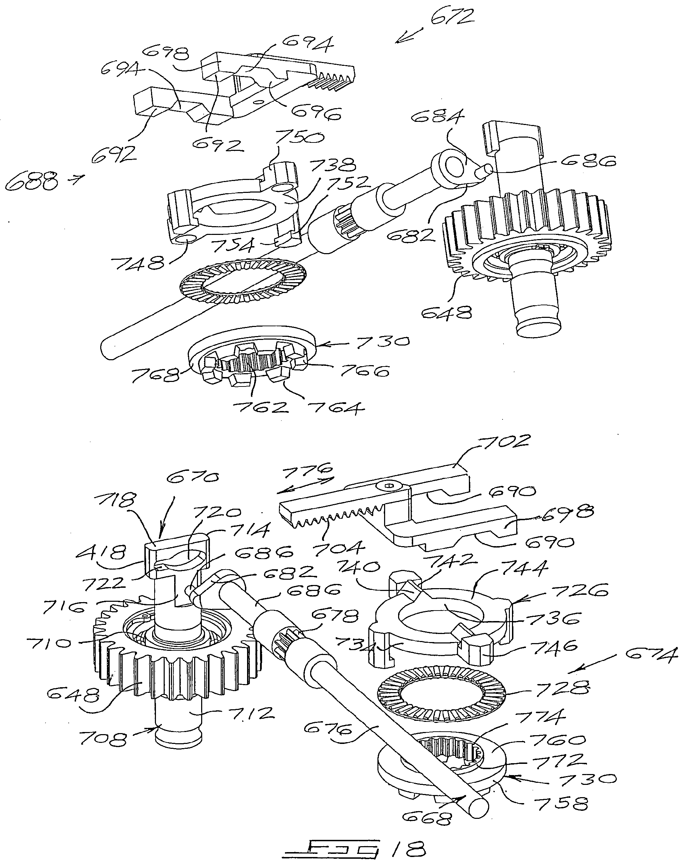

The axial projecting formations 660 of the output shaft 652 are shaped in a complementary manner to the rearwardly projecting angled formations 764 and are mated therewith with the angled side faces 766 (Figure 18) and 662 (Figure 7) flush with one another. The center splined bore 762 of the lock driver 730 is axially slidably engaged with the splined end 784 of the drive shaft 782 in such a way that it can be disengaged from the formation 660 of the output shaft 652 by being moved to the right in Figure 17. The angles of the angled side faces 766 and 662 are of such a nature that any torque transmitted between the output shaft 652 and the lock driver 730 creates a force F1 on the lock driver 730 which tends to move it to the right in Figure 17.

During operation of the RCCVT conditions may arise under which a torque exists between the differential unit 790 and the drive gear unit 470 while, at the same time, the selector fork unit 612 may be required to be moved from the position A to the position C, or from the position B to the position C (indicated respectively by arrows A, B and C in Figure 16). The torque may be of such a magnitude that the gear selector motor 624 which drives the selector fork unit 612 is not powerful enough to cause movement to these positions. For example, a vehicle to which the RCCVT is fitted, may come to a standstill on an uphill and it may then be required to select a reverse gear. A similar situation can arise when a change from reverse to forward, and vice versa, is required.

In the aforementioned conditions the manual selector arrangement 610 is used by a driver of the vehicle to disengage the lock driver 730 from the output shaft 652. This disengages the differential unit 790 from the drive gear unit 470, releases the torque, and allows the gear selector motor 624 to drive the selector fork unit 612 to a required position. Because any torque transmitted between the output shaft 652 and the lock driver 730 creates a force F1 on the lock driver 730 which tends to move it to the right in Figure 17, as mentioned above, the lock drive 730 is always biased to the right in Figure 17 under torque conditions and therefore the driver operated lock actuator 672 (operated via manual selector arrangement 610) merely serves as a trigger to unlock the output shaft 652 from the lock driver 730.

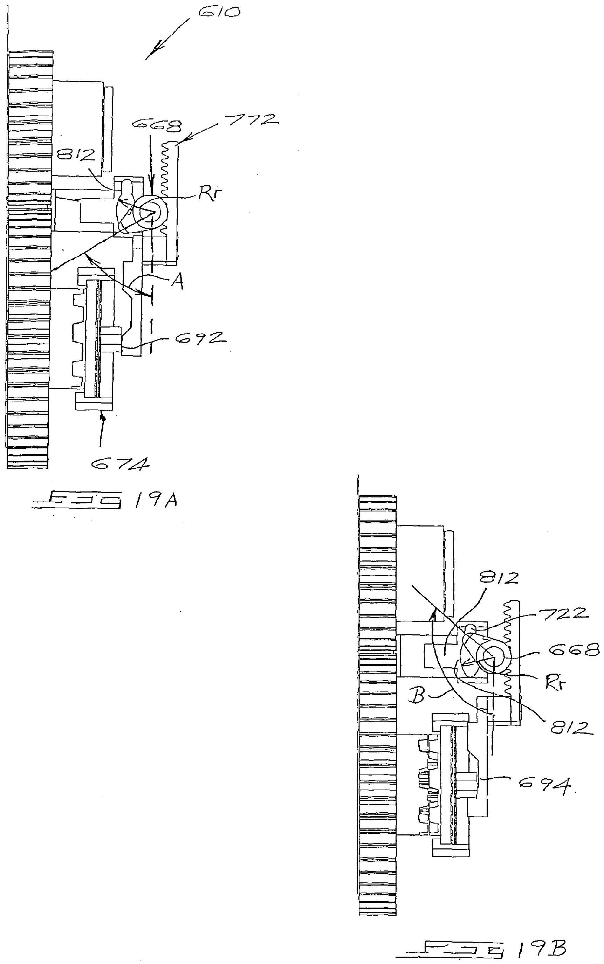

The functioning of the manual selector arrangement 610 for reverse, first neutral, second neutral and forward modes is described with reference to Figures 19A to 19D.

### Reverse

Figure 19A shows the selector shaft 668 in an angular position A relative to the vertical. In this position the crank pin 686 is tangential to a left curvature 812 of the elliptical cavity 720. The left curvature 812 has a radius Rr which is concentric with the selector shaft 668. The lock actuator 672 is positioned with its surface 692 in contact with cam tips 742 and the lock driver 730 and the output shaft 652 are interengaged by their respective formations 660 and 764. The fork 614 is at the position of the arrow C in Figure 16 and the gear 648 is engaged with the gears 634 and 650. The drive gear unit 470 is engaged with the final drive 24 to create a reverse ratio.

### First neutral

Figure 19B shows the selector shaft 668 in an angular position B relative to the vertical. In its transition from the angular position A to the angular position B the crank pin 686 remains positioned tangentially to the curvature 812 and the follower radius Rᵣ. The elliptical cavity 720 does not move and the gear 648 remains engaged with the gears 634 and 650. The lock actuator 672 is positioned with its surface 694 in contact with the cam tips 742 and the lock driver 730 and the output shaft 652 are not engaged. The fork 614 is at the position of the arrow C in Figure 16 and the drive gear unit 470 is not engaged with the final drive unit 24, to create a first neutral.

### Second neutral

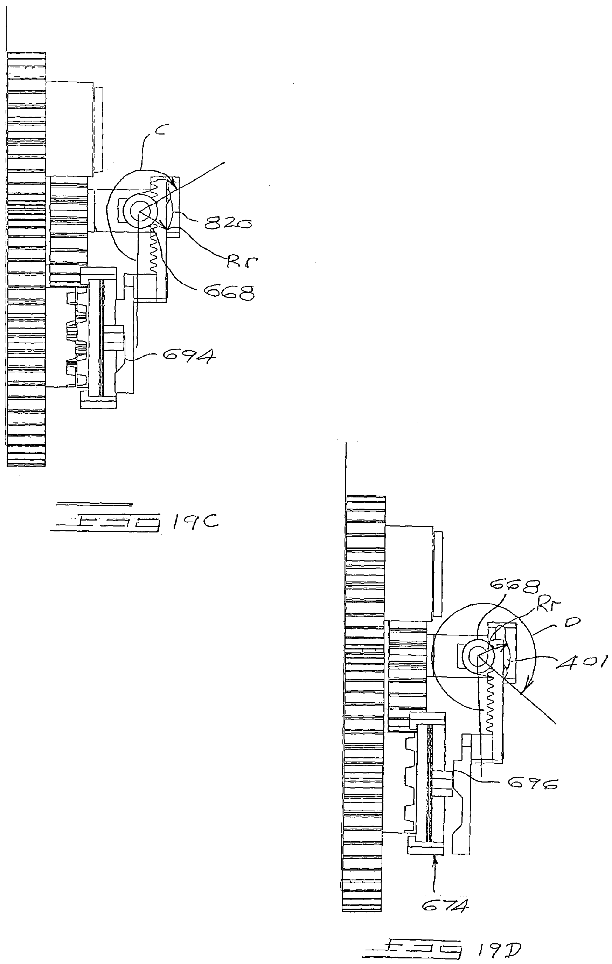

Figure 19C shows the selector shaft 668 in angular position C relative to the vertical. In its transition from the angular position B to the angular position C the crank pin 686 enters the slot 722 of the elliptical cavity 720 and moves the elliptical cavity 720 to the right of Figure 19B to its position shown in Figure 19C. The crank pin 724 is tangential to a right curvature 820 of the elliptical cavity 720. The curvature has a radius Rᵣ and is concentric with the selector shaft 668. During this transition the gear 648 is moved out of engagement with the gears 634 and 650.

The lock actuator 672 is positioned with its surface 694 in contact with the cam tips 742. The lock driver 730 and the output shaft 652 are still not engaged. The fork 614 is at the position of arrow C in Figure 16 and the drive gear unit 472 is not engaged with the final drive unit 24, to create a second neutral.

### Forward

Figure 19D shows the selector shaft 668 in an angular position relative to the vertical. In its transition from the angular position C to the angular position D the crank pin 686 remains tangential to the curvature 820 and the follower radius Rᵣ. The elliptical cavity 720 does not move and the gear 648 is not engaged with the gears 634 and 650. The lock actuator 672 is positioned with its face 696 in contact with the cam tips 742. The lock driver 730 and the output shaft 652 are engaged. This is the normal forward driving position. The fork 614 can move to any position to engage either the first ratio gear train 628 (position of arrow A) or the second ratio gear train 630 (position of arrow B) which is required for normal driving.

### Rotor backlash condition

The CVT described in D1 and D2 can suffer from backlash in the rotor positioning system, due to a resultant axial force on the rotor which alternates for each revolution of the rotor. Figure 3 shows the forces Fr1 and Fr2 of the RCCVT which act perpendicularly to the line contact between the rotor and the rotor follower bearings and which produce a resultant force Fa in the axial direction of the rotor. The force diagram is shown in Figure 3B. The forces Fr1 and Fr2 act through respective points B1 and B2 which intersect the contact line between the respective rotor follower and rotor. The points B1 and B2 are also coincident with the point C of Figure 5 of the respective rotor follower unit 16.

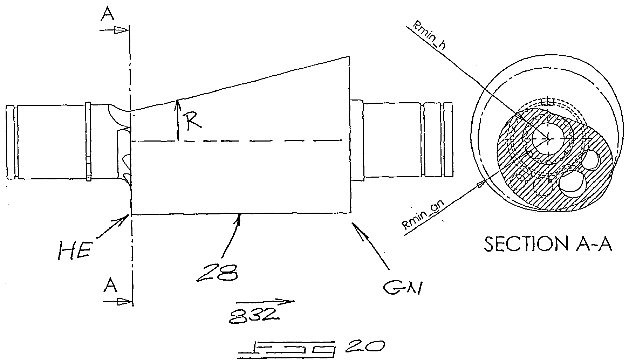

Figure 20 shows the rotor 28 with a minimum radius Rmin_h at a high end (HE) of the rotor and a minimum radius Rmin_gn at a geared neutral (GN) end of the rotor.

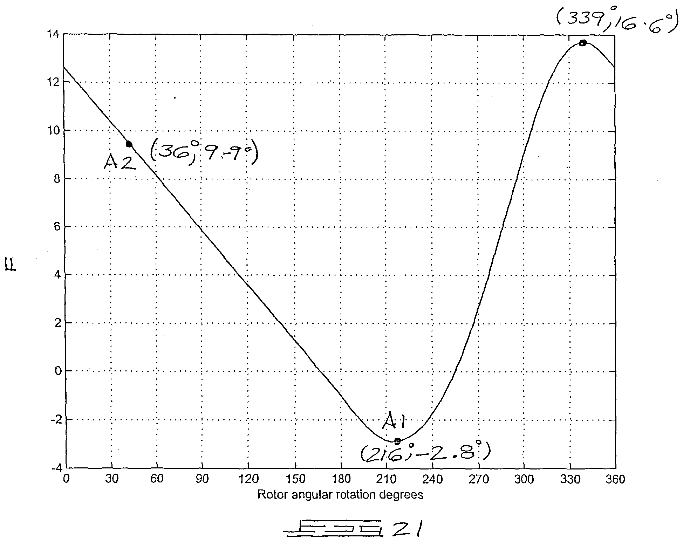

The minimum radius R of the outer surface OS, from the longitudinal axis LA, is linearly scaled from the value of Rmin_h to Rmin_gn over the length of the rotor 28, at such a rate of change that the resultant force Fa on the rotor is always in the direction of an arrow 832 for all load, ratio, and speed, conditions when operating the RCCVT (Figure 3, Figure 20). In this embodiment of the invention an angle F, as a result of Rmin_h and Rmin_gn, between the rotor axis and the rotor line contact with the rotor follower bearings 114 (CS1 and CS2), which remains constant in the axial direction of the rotor 28, is shown in Figure 21 for a 360° rotation of the rotor 28.

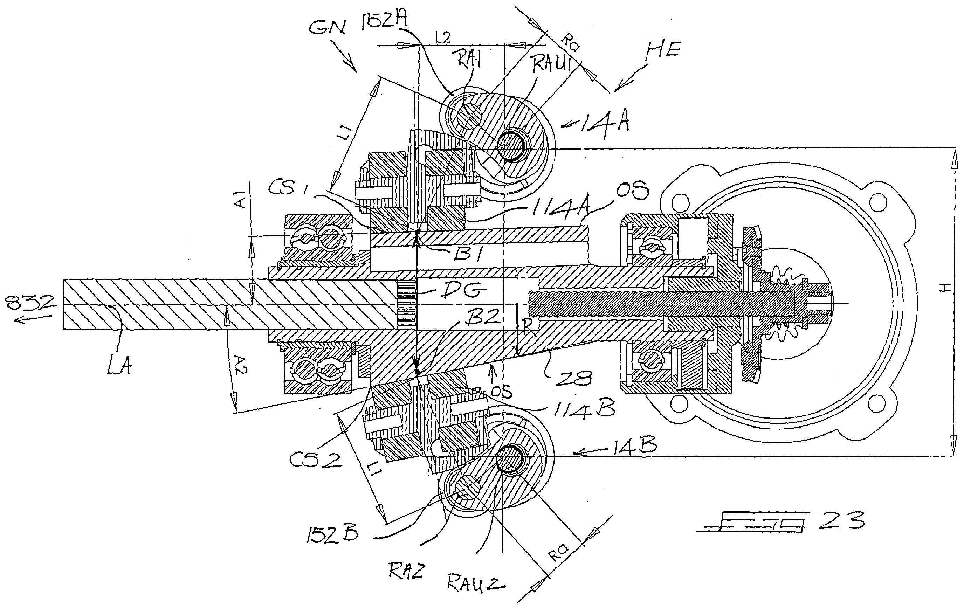

Figure 21 shows the deviation of the angle F for one rotor follower unit 16. The graph for a second rotor follower unit 16 is shifted by 180° of rotation of the rotor 28. Figure 23 shows a section of the rotor 28 where an upper rotor follower unit 16 has an angle F = A1 in Figure 3. This represents the minimum F angle of A1 = -2.8° which coincides with a rotor rotation angle of 216° as indicated in Figure 21. The bottom F angle A2 is 180° away at a rotation of 36° (of the rotor) where A2 = 9.9°. The F plot of Figure 21 is thus very much offset from 0 with a minimum value of -2.8° and a maximum value of 13.6° for a rotation of 339° of the rotor.

The resultant force Fa has the disadvantage of requiring more actuation power than was the case with D2 in which the maximum magnitude of F below and above zero is substantially the same (see D2, Figure 5, angles SA1 and SA2), which minimized the average resultant axial force on the rotor and therefore the actuation power.

The rotor follower units 16A and 16B have respective rotor follower bearings 114A, 114B with respective contact surfaces CS1, CS2 which are in line contact with the rotor outer surface OS. The lines of contact have respective center points B1 and B2.

The resultant force Fa also requires a larger difference between Rmin_h and Rmin_gn or, put differently, a larger rate of change between Rmin_h and Rmin_gn. This results in a shape of the rotor 28 wherein the circumference of the rotor varies substantially, depending on the axial position of the rotor. Larger speed differences in the line contact of each rotor follower bearing 114A, 114B with the rotor 28 are created and these reduce the mechanical efficiency when compared to the device in D2 (see Figures 6 and 7 in D7).

### Rotor follower backlash condition

The continuously variable transmission in D1 and D2 suffers from backlash in the rotor follower units interaction with the radial guides as contact shifts from one side to the other, for each revolution of the rotor. The resultant force on the rotor follower units in the rotor axial direction alternates in direction which causes the rotor follower units to move from one radial face to the other during operation.

Figure 22 shows the RCCVT in the casing 236. The components of the RCCVT are contained within the casing. Elements of the RCCVT which are important to an understanding of its working and functioning are described hereinafter.

The casing 236 includes a casing unit 840 which includes a main housing 82 with a slot 844 in one side (see Figure 26). A metal plate insert 846 is located in a cavity on one side of the slot. The housing 82 is typically manufactured from a suitable aluminum alloy. The metal plate insert 846 is made from a hardened steel which can withstand high contact stresses. An opposing side (not shown) of the casing includes a slot and an insert which is respectively identical to the slot 844 and to the metal plate insert 846.

During operation of the RCCVT the rotor follower units 16 are radially guided with their slot follower bearings 112 in line contact with one side of the metal plate inserts 846 while other sides of the metal plate inserts are clear of an opposing side 848 of the slot 844.

Figure 3 shows the top rotor follower unit 16 of the RCCVT with a force Fs1 acting on the curved section 126 through a point B1 via line contact with the rocker rollers 152. The resultant forces are a force Fr1 r, which is the reaction force of the force Fr1 and which is thus of the same magnitude as Fr1 but in an opposite direction, perpendicular to the contact line, and a force Fx1 which is perpendicular to the metal plate insert 846. A similar situation prevails for the bottom rotor follower unit 16 with a force Fs2 acting on the curved section 58 through a point B2 via line contact with the rocker rollers 152. The resultant forces are a force Fr2r, which is the reaction force of the force Fr2 and which is thus of the same magnitude as Fr2 but in an opposite direction, perpendicular to the contact line, and a force Fx2 which is perpendicular to the metal plate insert 846. The force diagrams are shown in Figures 3C and 3D. The points B1 and B2 in Figure 3 coincide with the points C of the rotor follower units 16 as defined in Figure 5.

The rollers 152A, 152B of the rocker arm units 14A, 14B are rotatable about respective axes RA1, RA2, and are pivotal about respective axes RAU1, RAU2 which are spaced from RA1, RA2 by a distance Ra. The horizontal distance between RAU1 and B1, and between RAU2 and B2, is L2.

In order to eliminate the backlash problem, the relative dimensions of the components must be designed so that the forces Fx1 and Fx2, and resultant force components aligned with the axis LA, are always in the direction of the arrow 832. This condition will always keep the slot follower bearings 112 in line contact with the metal plate inserts 846 in the radial slots and, in so doing, will eliminate any backlash.

### Linear conversion condition

The relative dimensions of the components, including the radius Ra of the rocker arm units 14 and the fixed distance L1 between the center of the rocker arm roller 152 and the points B1 and B2, and the angular operating displacement of the rocker arm units 14, as well as the fixed distance L2 between the rocker arm units 14 and the points B1 and B2, need to be of such a nature that the radial displacements of the points B1 and B2 are converted in a linear way to the angular displacement of the respective rocker arm unit 14, as is also the case in D1 and D2.

### Torsion bar relative rotation condition

In D2, advantage was taken of the relative rotation of the rocker arms, to optimize the torsion bars/springs by coupling the rocker arms together via springs/torsion bars as shown in Figure 3 of D2.

However in the RCCVT, due to the "Rotor backlash condition", and the "Rotor follower backlash condition" (as described hereinbefore), the rate of change from Rmin-h to Rmin_gn over the length of the rotor, is quite high and as a result the distance between the points B1 and B2 of the rotor follower units 16 in the high ratio position, indicated as DH in Figure 3, is much smaller than the distance between the points B1 and B2, indicated as DG in Figure 23, in the geared neutral position. This difference can most clearly be seen by comparing Figure 3 (high ratio) to Figure 23 (geared neutral). The result of this is the two rocker arm units 14 are turned further away from each other in the geared neutral position than in the high ratio position.

If the ends of the torsion bars 200 were coupled together (in which event the slider block 266 would remain in its Figure 8 position when ratio changes take place), exceptionally long torsion bars would be required to account for the distance variation between GH (high ratio) and GN (geared neutral position). This would translate into additional twist in the torsion bars. Also, exceptionally high torsion bar forces would be generated in the geared neutral position where such forces are not needed. In the geared neutral position, as shown in Figure 23, the points B1 and B2 lie on the same circle perpendicular to the axis of the rotor 28 and therefore are stationary relative to the main casing unit 840 and result in no difference in the angular displacement of the two rocker arm units 14 relative to the main casing unit 840, as the rotor 28 turns through 360°, and therefore the output from the gear 470 does not rotate. Therefore, little torsion bar torque is needed in the geared neutral position.

In order to optimize the torsion bars and to provide torque twist/spring forces only when needed, a means for the relative rotation of the six-sided extensions 440 of the torsion bars, and of the pushrod lever units 272, during ratio changing, is required.

The torsion bars, and their respective components, are distinguished from one another, as appropriate, by the addition of the suffix A, or B. Opposed ends 200A1 and 200A2, and 200B1 and 200B2, of the torsion bars are connected to the respective rocker arm units and to the pushrod unit.

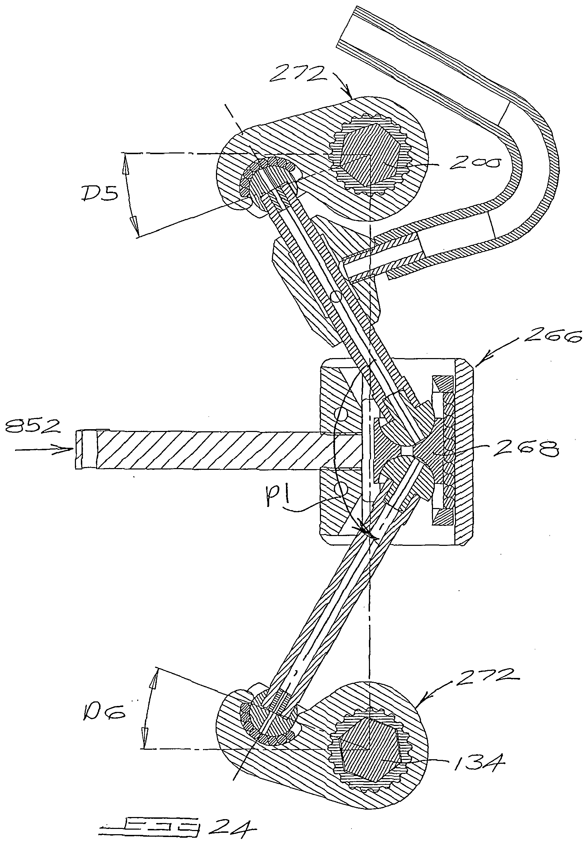

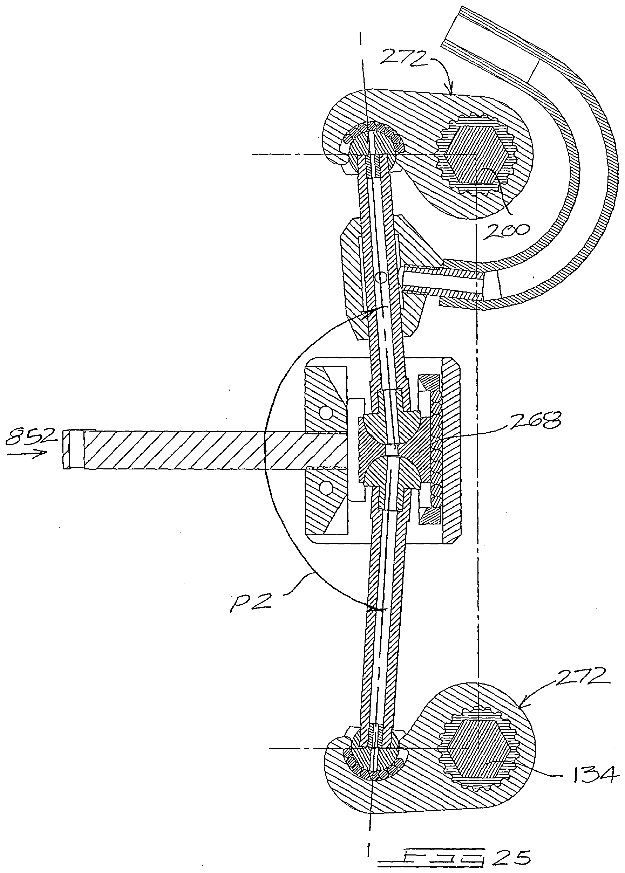

Figure 24 shows the pushrod lever units 272 (geared neutral position) displaced from their initial positions in Figure 25 (high ratio) after movement of the slider block 266 in the direction of an arrow 852. Due to the movement of the slider block 266, the top pushrod lever unit 272 is rotated through an angle D5 away from the normal, and the bottom pushrod lever unit 272 is rotated through an angle D6 away from the normal. The required relative adjustment between the two pushrod lever units 272 is thereby established. The transition from the Figure 25 position to Figure 24 position is not linearly linked to the axial position of the rotor 28. A nonlinear relationship is determined by the profile of the toothed cam 248 which is optimized to provide the minimum torsion bar twist for all the axial positions of the rotor 28. The slider block 266 is stationary in geared neutral (Figure 24 position) and the pushrod lever units 272 do not oscillate. Maximum oscillation of the pushrod lever units 272 occurs in the high ratio.

### Reduced ratio actuation power

The pushrod angles P2 and P1 in Figures 25 and 24 respectively are always smaller than 180° and thus create a reaction torque of T1 on the spur gear 106. Since the force Fa is always in the direction of the arrow 832, the ball screw shaft 64 will always be in tension creating a reaction torque T2 on the bevel gear 108 (Figure 1). Since the spur gear 106 and the pinion bevel gear 108 are coupled together, and since T1 and T2 are in opposite directions, these two torques will partially cancel each other, thereby reducing the power requirement for ratio actuation via the ratio motor 104.

### Stable third order differential equation condition

The two torsion bars 200 linked with the pushrod lever units 272, with the two pushrods 270 and with the pushrod connector 268 constitute a third order differential equation which is represented by a diagram in Figure 11C.

Point E1 represents the six-sided extension 454 of the top torsion bar 200, point E2 represents the six-sided extension of the bottom torsion bar 200, and K1 is the spring constant of each torsion bar 200. The inertia of two pushrod lever units 272, the inertia of two pushrods 200 and inertia of the pushrod connector 268 are added together to form the system inertia Si. The point E1 is driven by the upper rocker arm unit 14 and the point E2 by the lower rocker arm unit 14.

Figure 27 shows the solution for the displacement of the third order differential equation for the rotor 28 in the high ratio position. Movement of the upper rocker arm unit 14 is indicated by a graph 862, the displacement of the lower rocker arm unit 14 is indicated by a graph 864, while a graph 866 presents the displacement of the resulting upper pushrod lever unit 272 for an input rpm at the rotor 28 of 1 rpm with the RCCVT in the high ratio.

A graph 868 shows the displacement of the resultant top pushrod lever unit 272 at a rotor 28 rpm that is high enough to render the system unstable. During such conditions the transmission will fail. By increasing K1 and by reducing Si the unstable condition can be moved to occur at a higher rpm. Therefore, in order to optimize the system, the components contributing to Si need to have as low as possible inertia and/or mass. Because K1 is primarily determined by the force required to keep the rotor follower units 16 and rocker arm units 14 in line contact with each other, it is undesirable to adjust K1 higher in order to get the third order system stable. Therefore, the minimization of the Si value is of critical importance to obtain maximum rotor input rpm and, hence, an acceptable capability of the rotor.

### Stable one-way clutch rollers

The process of locking the one-way clutch gear 478 involves the following. A first step involves the wedging of the roller 550 between the roller contact surface 528 and the outer contact surface 168 of the rotor arm unit 14. The next step involves torque loading between the roller contact surface 528 and the outer surface 168 during which the roller 550 is further rolled between these surfaces. The surfaces 528 and 168 and the surface of the roller 550, as well as the components supporting them, are deformed. This is commonly known as torque twist in one-way clutches and sprag terminology and is defined by the displacement in degrees between the one-way clutch gear 478 and the rocker arm unit 14 relative to the axis of the surface 168.

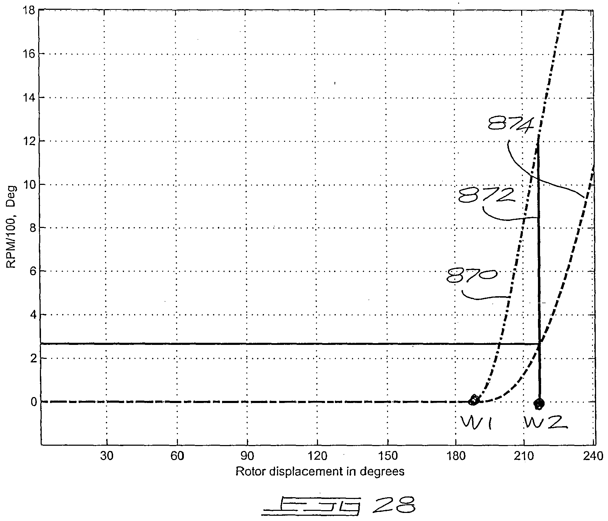

During the unlocking of the one-way clutch gear 478, the reverse happens and the roller 550 is rolled back and then released. In the RCCVT this releasing process happens in a very short time, resulting in high relative velocities. Figure 28 shows the unlocking process of the roller 550. A graph 870 shows the relative rpm between the rocker arm unit 14 and the one-way clutch gear 478 in units of rpm/100 and a graph 874 shows the releasing torque twist in degrees. Up to a point W1 the respective one-way clutch gear 478 and the rotor arm unit 14 are locked together and drive the output. From the point W1 to a point W2 the torque twist generated during locking is released while at the point W2 the relative rpm between the rotor arm unit 14 and the one-way clutch gear 478 is about 1200 rpm and the released torque twist is 2.6° for a rotor input speed of 5500 rpm. The rpm of the roller 550 around its own axis at the point W2 is about 1100 rpm while the roller 550 and its spring holder 552 are travelling at about 1.4 m/s, tangentially to the outer surface 168, in the direction of an arrow 878 in Figure 14, against the bias force of the springs 554.

This rapid disengagement of the one-way clutch gear 478 does not occur during normal usage of one-way clutches and sprags in automotive transmission and is unique to the rotor controlled RCCVT and is attributable to the angular velocity profile of the rocker arm units 14.

In order to stabilize the roller 550 before the next locking cycle, two strategies are used. The first is to stop the spinning of the roller 550 and the second is to deal with the velocity of the rollers in the direction of an arrow 878 (Figure 14).

In the first strategy, the resilient cylinders 558 act as shock absorbers to dampen the spinning of the roller 550. As an alternative to the resilient cylinders 558, friction material may be attached to the circular cut-out 562 of the spring holder 552. This material would also dampen the spinning of the roller 550. In the second strategy, to dampen the velocity of the roller 550 and spring holder 552 in the direction of the arrow 878, the resilient cylinders 556 inside the roller springs 554 act as shock absorbers.

The resilient cylinders 558 and 556 may be of any suitable shape or material to provide these shock absorbing capabilities.

### Minimise rotor operating envelope

The size of the central bore 80 of the main casing 82 to a large extent dictates the overall size of the RCCVT. Therefore, the minimization of the bore 80 is of importance. By scaling Rmin_h from a smaller value to a larger value of Rmin_gn, the resultant rotor shape is minimized for maximum diameter. Also, that shape facilitates dynamic balancing via the holes 46 and requires only a small front counterweight 42 and a small rear counterweight 44. As the rotor 28 operates within the central bore 80, the minimization of the maximum diameter of the rotor also minimizes the diameter of the central bore 80. The central bore 80, on either side of the casing 82, may have different diameters to facilitate this optimization.

Any components, principles or concepts not discussed in detail in this document are similar to, or the same as, those in D1 and D2.

### Two speed unit

The two speed unit 22 reduces the maximum torque requirement of the output gear unit 20 and therefore the size and force handling capabilities of all components between the rotor 28 and the output gear unit 20. This also reduces the inertia of the oscillating components and results in thinner and shorter torsion bars 200.

The drive gear unit 470 includes a roller ramp one-way clutch configuration, the functioning of which relies on wedging of the rollers. The wedging is dependent on friction in order to provide drive when the one-way clutch is engaged. The resultant high contact stresses reduce component life, and give rise to backlash in the form of torque twist before drive is established in the one-way clutch locking process. This torque twist is typically in the order of 2.6°. The stability of the rollers is also problematic at high engagement rates, typically up to 100 Hz. A solution to this includes stiffer roller springs but brings a downside of increasing freewheel drag which then reduces mechanical efficiency.

### Slider block modification

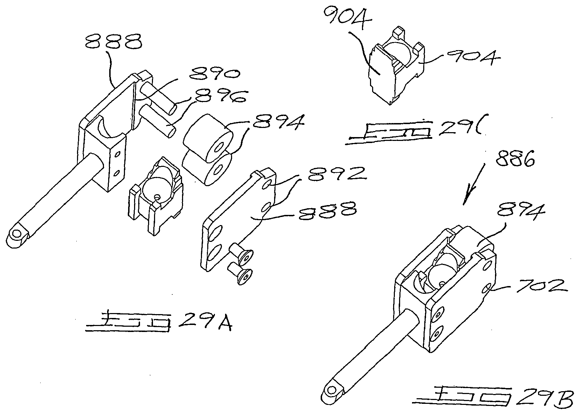

Figures 29A, 29B and 29C show a modified slider block 886 which includes two identical guide plates 888. Each plate, on a rear side, has a step 890 with pin holes 892. Fronts of the plates are identical to the guide block 288. The needle rack 246 is replaced by two roller bearings 894 each of which has a pin 896. The bearings 894 and pins 896 are sandwiched between the guide plates 888 in the assembled slider block 886. The pins 896 are located in the holes 892 as shown in Figure 29B. The slider block 886 includes a modified pushrod connector which has an extended bottom face 904 on which the bearings 894 run during operation. The remaining components and functions thereof the slider block 886 are similar to the components and functions of the slider block 288.

### Drive gear unit modification

The drive gear unit 472 includes a roller ramp, one-way clutch configuration, the functioning of which relies on the wedging of the rollers in order to provide drive when the one-way clutch is engaged. As mentioned, the roller 550, during the disengagement process, spins at 1200 rpm and travels at 1.4 m/s for a rotor speed of 5500 rpm. In another embodiment of the drive gear unit 472 a modified roller 908 is used to prevent it from spinning and to eliminate the spring holder 552 end. This also eliminates a moving component from the assembly.

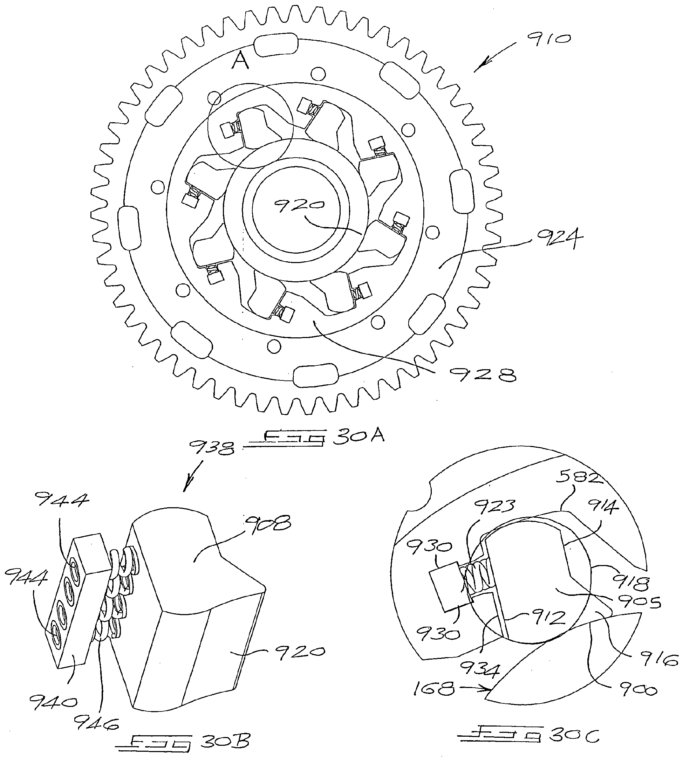

Figure 30 shows a modified drive gear unit 910 which differs from the drive gear unit 470 as follows.

Modified rollers 908 include a cut-away 912 at a front end and a cut-away 914 at a rear end. The rear end also includes a tail 916 which extends beyond the diameter of the roller 550, as is indicated by a dotted line 918. The tail 916 has a freewheel surface 920 which has the same radius as the outer surface 168.

The one-way clutch gear 924 differs from the one-way clutch gear 478 as follows. The cavity formations 526 and 530 are replaced by a spring holder formation 928 which has a rectangular slot 930 adjacent a narrow opening 932 extending to a surface 934 which is substantially parallel to the cut-away 914. The roller contact surface 582 is retained.

The spring holder 552 is replaced with a spring locator 938 which has a rectangular body 940 with four holes 944 into which four compression springs 946 fit. The base of each respective compression spring 946 is flush with the rear of the spring locator 938 as indicated in Figure 30B. The spring locator 938 is positioned in the rectangular slot 930 while each compression spring 946 is biased against the cut-away 912 and the rear of the rectangular slot 930, as indicated in Figure 30C.

### Operation

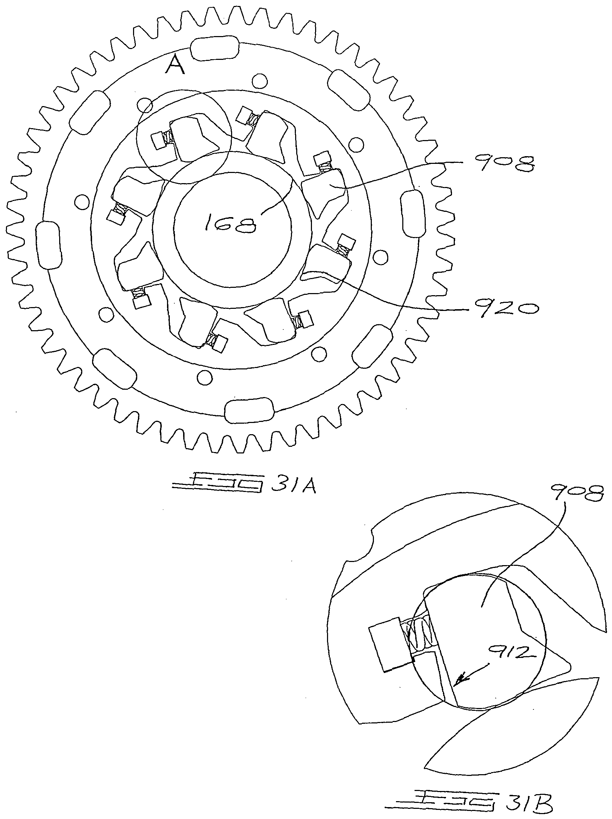

Figure 30A shows the drive gear unit 910 in a freewheel position in which the freewheel surfaces 920 are in sliding contact with the outer surface 168. Figures 31A and 31B show the drive gear unit 910 in a locked position with the modified rollers 908 rolled away from the cut-out surface 912, as a result of torque twist during engagement. During this process the freewheel surfaces 920 move away from the outer surface 168. On the next disengagement cycle the freewheel surfaces 920 move back into contact with the outer surface 168 and so prevent any spinning of the rollers 908 and stabilize them for a following engagement cycle.

During certain operating conditions the modified roller 908 may perform unsatisfactorily by oscillating around its axis and by bouncing against the outer surface 168. This can happen during freewheeling and the oscillation can cause failed locking cycles due to the fact that the rollers 908 are not necessarily in contact with the outer surface 168 when locking is required.

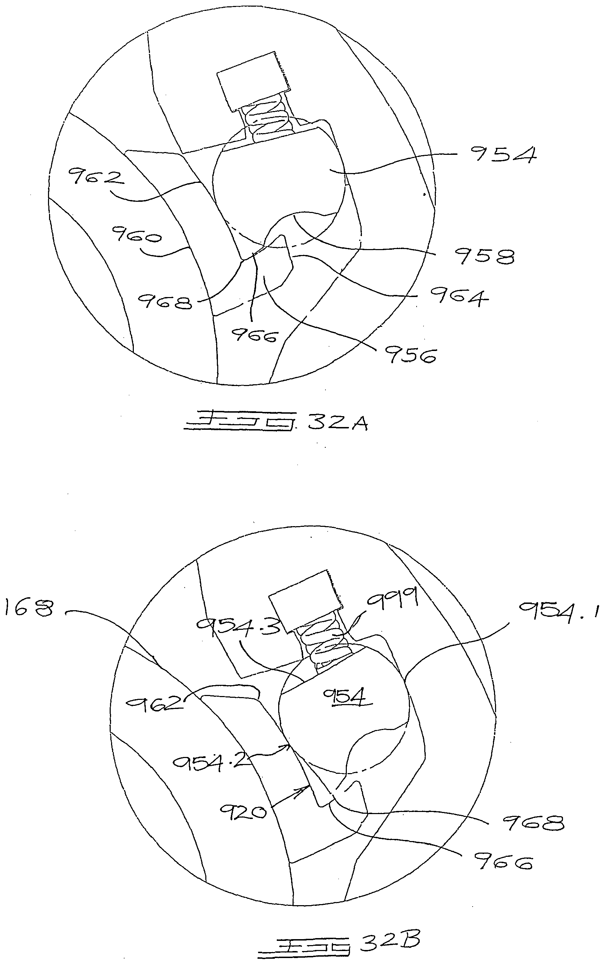

Figure 32A shows a modified roller 954 and a roller saddle 956. The remaining components are similar to those mentioned in connection with the drive gear unit 910. The roller 954 is smaller than the roller 908 and includes a cavity 958. The remainder of the roller 954 is similar to the roller 908. Thus the roller 954 has an outer surface which in plan includes a first circular arc 954.1, an opposed second circular arc 954.2, a planar surface 954.3 which connects an end of the first circular arc to an end of the second circular arc, and a connecting surface between a second end of the first circular arc and a second end of the second circular arc. The connecting surface has a freewheel surface 920 adjacent the second end of the second circular arc which is curved in an opposite sense to the curvature of the second circular arc, with the same radius as a surface 962 of the saddle 956, a tip 968, and a cavity 954.4 between the tip and the second end of the first circular arc.

An inner surface 960 of the saddle 956 has the same radius as the outer surface 168. An outer surface 962 of the saddle is concentric with the inner surface 960 and includes an end stop 964. A body of the saddle extends the whole length of the roller 954. The end stop 964 includes a limiting surface 966. A biasing element 999 acts between the planar surface 954.3 of the roller and the one-way clutch gear.

Figure 32A shows the roller 954 and the saddle 956 in a freewheel position. Figure 32B shows the same components in a locked position. It has been found that during freewheeling the inner surface 960 is in sliding contact with the outer surface 168 while the roller 954 is isolated from the sliding motion which initiated the oscillation and the bouncing of the roller 908. During freewheeling the sliding friction between the saddle 956 and the outer surface 168 locates the saddle 956 with the limiting surface 966 against a tip 968 of the roller 954.

In Figure 32B, which shows the roller 954 and the saddle 956 in the locked position, the roller 954 has rolled on the surface 962 while the saddle 956 has moved together with the outer surface 168 during the torque-twist take up.

The modified roller 954 has the advantage of producing surface contact between the saddle 956 and the outer surface 168 during locking as well as freewheeling. This significantly increases the life of the outer surface 168.

The inner surface 960 of the saddle 956 undergoes hydrodynamic lubrication when freewheeling. The lubrication does not dissipate quickly enough after freewheeling and this prevents locking of the one-way clutch. In order to address this effect the surface 960 can be "broken up". For example, the surface may be formed with a number of grooves to produce a plurality of smaller surfaces (collectively still referred to as a surface 960). The hydrodynamic lubrication is dependent on the magnitude of a continuous surface area and by reducing the continuous surface to a multitude of smaller surfaces the effective area is reduced and the aforementioned effect can be overcome.

In a different technique the surface 960 is formed by a plurality of curvatures. Each curvature produces a line contact with the surface 168. This has a similar effect to what has been mentioned in that it prevents undesirable hydrodynamic lubrication which, after freewheeling, can prevent locking of the one-way clutch.

The components, configurations and parameters described in this patent specification were optimized through the use of special purpose software.

The RCCVT is suited for automotive use, and is commercially competitive in respect of size, weight, performance and manufacturing costs. In more specific terms the RCCVT:
(1) is able to receive an input rpm of 6500 rpm at the rotor 28,
(2) is capable of handling the torque and power associated with an input rotational speed of up to 6500 rpm;
(3) limits the length of the torsion bars 200 so that they do not extend beyond commercially designed space limits;
(4) optimizes the torsion bar torque (pushrod unit 230) while maintaining a stable third order system (Figure 11 C);
(5) reduces the ratio actuation torque and power - the motor 104 is coupled to the ball screw unit 40 and to the pushrod unit 230 and results in the partial cancelling of T1 and T2;
(6) extends the ratio range beyond a commercial norm - this is achieved by coupling the RCCVT to a gearbox 22 which has two forward gears and one reverse gear;
(7) produces a stable and smooth drive - this is achieved via the stable one-way clutches;
(8) makes provision for driver manual disengagement in loaded torque conditions - this aspect has been addressed in the specification with reference to the hill-holding capability;
(9) offers a mechanical transmission efficiency which is comparable to that of a manual transmission;
(10) has a mass comparable to the mass of a commercial automated transmission; and
(11) has a manufacturing cost which is lower than the cost of a commercial automated manual transmission.

## Claims

1. A rotor controlled continuously variable transmission (RCCVT) which includes:
an input shaft (30) which is mounted for rotation about a longitudinal axis (LA),
a rotor (28) which is attached to the input shaft (30), which is rotatable together with the input shaft (30) and which is axially movable relative to the input shaft (30),
the rotor (28) including a high ratio end (HR) with a minimum radius, from the longitudinal axis (LA), of Rmin_h, a geared neutral end (GN) with a minimum radius, from the longitudinal axis (LA), of Rmin_gn, an outer surface (OS) between the high ratio end (HR) and the geared neutral end (GN), and a minimum radius R from the longitudinal axis (LA) to the outer surface (OS) between the high ratio end (HR) and the geared neutral end (GN),
a first rotor follower unit (16A) with at least one rotor follower bearing (114A) with a first contact surface (CS1) which is in line contact with said outer surface (OS),
a second rotor follower unit (16B) with at least one rotor follower bearing (114B) with a second contact surface (CS2) which is in line contact with said outer surface (OS),
an output transmission (20),
a first rocker arm unit (14A) and a second rocker arm unit (14B) for respectively transmitting rotational drive from the rotor follower units (16A, 16B) to the output transmission (20),
wherein
(i) the minimum radius R increases linearly from Rmin_h to Rmin_gn over the length of the rotor (28) from the high ratio end (HR) to the geared neutral end (GN) whereby forces caused by the first and second rotor follower units (16A, 16B) on the rotor (28) have a resultant component (Fa) on the rotor (28), in the direction of the longitudinal axis (LA), which is always in the axial direction (832) from the high ratio end (HR) to the geared neutral end (GN), and
(ii) said first contact surface (CS1) and said second contact surface (CS2) respectively remain in line contact with said outer surface (OS) of the rotor (28),
**characterized by**
a first torsion bar (200A) with a first end (200A1) and a second end (200A2) and a second end (200A2), a second torsion bar (200B) with a first end (200B1) and a second end (200B2), wherein the first end (200A1) of the first torsion bar (200A) is connected to the first rocker arm unit (14A), the first end (200B1) of the second torsion bar (200B) is connected to the second rocker arm unit (14B), a pushrod unit (230) connected to the second end (200A2) of the first torsion bar (200A) and to the second end (200B2) of the second torsion bar (200B), and an actuation unit (228) which, in response to the axial position of the rotor (28), causes actuation of the pushrod unit (230) to match the required torque on the rocker arm units (14A, 14B) with the torques produced by the torsion bars (200A, 200B).

2. A RCCVT according to claim 1 wherein:
i. a center-point of said line contact of said first contact surface (CS1) with said outer surface (OS) is B1,
ii. a center-point of said line contact of said contact surface (CS2) with said outer surface (OS) is B2,
iii. the first rocker arm unit (14A) includes a roller (152A) which is rotatable about an axis RA1 and is pivotal about an axis RAU1 which is spaced from the axis RA1 by a distance Ra, and the distance between RAU1 and B1, in the direction of the longitudinal axis LA, is L2,
iv. the second rocker arm unit (14B) includes a roller (152B) which is rotatable about an axis RA2 and is pivotal about an axis RAU2 which is spaced from the axis RA1 by a distance Ra, and the distance between RAU2 and B2, in the direction of the longitudinal axis LA, is L2,
v. the spacing between RAU1 and RAU2 is H and wherein:
vi. L1, L2, Ra and H are such that forces on the rotor following units (16A, 16B) have respective resultants Fx1, Fx2 in the direction of the longitudinal axis (LA), which are always in the axial direction (832) from the high ratio end (HR) to the geared neutral end (GN), whereby the rotor follower units (16A, 16B) are continuously biased in the axial direction (832).

3. A RCCVT according to claim 2 wherein radial movement of the centre points B1 and B2 from the longitudinal axis (LA) is converted in a linear fashion to angular displacement of the first and second rocker arm units (14A and 14B) about the respective axes RAU1 and RAU2.

4. A RCCVT according to any one of claims 1 to 3 wherein the actuation unit (228) establishes a non-linear relationship between the torque produced by the first and second torsion bars (200A, 200B) and the said axial position of the rotor (28).

5. A RCCVT according to any one of the preceding claims wherein the output transmission (20) includes a drive gear unit (910), a one-way clutch gear (924) meshed with the drive gear unit (910), and a plurality of rollers (954) and associated saddles (956) for imparting rotational drive to the one-way clutch gear (924), wherein for each roller and associated saddle, the roller (954) has an outer surface which in plan includes a first circular arc (954.1), an opposed second circular arc (954.2), a planar surface (954.3) which connects an end of the first circular arc to an end of the second circular arc, and a connecting surface between a second end of the first circular arc and a second end of the second circular arc, wherein the connecting surface includes a freewheel surface (920) adjacent the second end of the second circular arc which is curved in an opposite sense to the curvature of the second circular arc, a tip (968), and a cavity (954.4) between the tip (968) and the second end of the first circular arc, and wherein the saddle (956) in plan has an inner surface (960) which has the same radius as the radius of the outer surface (168) of the respective rocker arm unit (14), an outer surface (962) which is concentric with the inner surface (960) and which is of the same radius as said freewheel surface, and an end stop (964) which projects from the outer surface (962), the end stop including a limiting surface (966), and a biasing element (999) which acts between the planar surface (954.3) of the roller and the one-way clutch gear (924) and wherein, in a freewheel position, the inner surface (960) is in sliding contact with the outer surface (168) and the saddle (956) is positioned with its limiting surface (966) against the roller tip (968) and, in a locked position, the roller tip (968) is displaced from the outer surface (962) and is in contact with the limiting surface (966).

6. A RCCVT according to any one of the preceding claims provided in combination with a gearbox (22) which includes two forward gears and a reverse gear.

7. A RCCVT according to any one of the preceding claims which includes an axial lock (672, 674) which is biased to unlock under torque and wherein unlocking is manually triggered when required.

## Patentansprüche

1. Rotorgesteuerte stufenlos variable Transmission (RCCVT, Rotor Controlled Continuously Variable Transmission), umfassend:
eine Eingangswelle (30), die um eine Längsachse (LA) drehbar gelagert ist,
einen Rotor (28), der an der Eingangswelle (30) angebracht ist, der zusammen mit der Eingangswelle (30) drehbar ist, und der in Bezug auf die Eingangswelle (30) axial beweglich ist,
wobei der Rotor (28) ein Hochbereichsende (HR) mit einem minimalen Radius, von der Längsachse (LA), von Rmin_h, ein Neutralstellungsende (GN) mit einem minimalen Radius, von der Längsachse (LA), von Rmin_gn, eine Außenfläche (OS) zwischen dem Hochbereichsende (HR) und dem Neutralstellungsende (GN) und einen minimalen Radius R von der Längsachse (LA) zur Außenfläche (OS) zwischen dem Hochbereichsende (HR) und dem Neutralstellungsende (GN) aufweist,
eine erste Rotormitnehmereinheit (16A) mit mindestens einem Rotormitnehmerlager (114A) mit einer ersten Kontaktfläche (CS1), die mit der Außenfläche (OS) in Linienkontakt steht,
eine zweite Rotormitnehmereinheit (16B) mit mindestens einem Rotormitnehmerlager (114B) mit einer zweiten Kontaktfläche (CS2), die mit der Außenfläche (OS) in Linienkontakt steht,
eine Abgangstransmission (20),
eine erste Kipphebeleinheit (14A) und eine zweite Kipphebeleinheit (14B), die jeweils zum Übertragen eines Rotationsantriebs von den Rotormitnehmereinheiten (16A, 16B) an die Abgangstransmission (20) ausgebildet sind,
wobei
(i) der minimale Radius R von Rmin_h auf Rmin_gn über die Länge des Rotors (28) vom Hochbereichsende (HR) zum Neutralstellungsende (GN) linear zunimmt, wodurch von der ersten und zweiten Rotormitnehmereinheit (16A, 16B) am Rotor (28) erzeugte Kräfte eine resultierende Komponente (Fa) am Rotor (28) in Richtung der Längsachse (LA) aufweisen, die immer in axialer Richtung (832) vom Hochbereichsende (HR) zum Neutralstellungsende (GN) verläuft, und
(ii) die erste Kontaktfläche (CS1) bzw. die zweite Kontaktfläche (CS2) mit der Außenfläche (OS) des Rotors (28) in Linienkontakt bleiben,
**gekennzeichnet durch**
einen ersten Torsionsstab (200A) mit einem ersten Ende (200A1) und einem zweiten Ende (200A2) und einem zweiten Ende (200A2), einen zweiten Torsionsstab (200B) mit einem ersten Ende (200B1) und einem zweiten Ende (200B2), wobei das erste Ende (200A1) des ersten Torsionsstabs (200A) mit der ersten Kipphebeleinheit (14A) verbunden ist, das erste Ende (200B1) des zweiten Torsionsstabs (200B) mit der zweiten Kipphebeleinheit (14B) verbunden ist, eine Stößelstangeneinheit (230), die mit dem zweiten Ende (200A2) des ersten Torsionsstabs (200A) und dem zweiten Ende (200B2) des zweiten Torsionsstabs (200B) verbunden ist, und eine Betätigungseinheit (228), die in Abhängigkeit von der axialen Position des Rotors (28) eine Betätigung der Stößelstangeneinheit (230) auslöst, um das erforderliche Drehmoment an den Kipphebeleinheiten (14A, 14B) mit den von den Torsionsstäben (200A, 200B) produzierten Drehmomenten abzustimmen.

2. RCCVT nach Anspruch 1, bei dem:
i. ein Mittelpunkt des Linienkontakts der ersten Kontaktfläche (CS1) mit der Außenfläche (OS) B1 ist,
ii. ein Mittelpunkt des Linienkontakts der zweiten Kontaktfläche (CS2) mit der Außenfläche (OS) B2 ist,
iii. die erste Kipphebeleinheit (14A) eine Rolle (152A) aufweist, die um eine Achse RA1 drehbar ist und um eine Achse RAU1 schwenkbar ist, die von der Achse RA1 um einen Abstand Ra beabstandet ist, und der Abstand zwischen RAU1 und B1, in Richtung der Längsachse LA, L2 ist,
iv. die zweite Kipphebeleinheit (14B) eine Rolle (152B) aufweist, die um eine Achse RA2 drehbar ist und um eine Achse RAU2 schwenkbar ist, die von der Achse RA1 um einen Abstand Ra beabstandet ist, und der Abstand zwischen RAU2 und B2, in Richtung der Längsachse LA, L2 ist,
v. der Abstand zwischen RAU1 und RAU2 H ist, und bei dem:
vi. L1, L2, Ra und H derart ausgebildet sind, dass Kräfte an den Rotormitnehmereinheiten (16A, 16B) jeweils Resultierende Fx1, Fx2 in Richtung der Längsachse (LA) aufweisen, die immer in axialer Richtung (832) vom Hochbereichsende (HR) zum Neutralstellungsende (GN) verlaufen, wodurch die Rotormitnehmereinheiten (16A, 16B) durchgängig in axialer Richtung (832) beaufschlagt werden.

3. RCCVT nach Anspruch 2, bei dem eine radiale Bewegung der Mittelpunkte B1 und B2 von der Längsachse (LA) in eine lineare zur Winkelverschiebung der ersten und zweiten Kipphebeleinheit (14A und 14b) um die zugehörigen Achsen RAU1 und RAU2 umgewandelt wird.

4. RCCVT nach einem der Ansprüche 1 bis 3, bei dem die Betätigungseinheit (228) eine nichtlineare Beziehung zwischen dem vom ersten und zweiten Torsionsstab (200A, 200B) produzierten Drehmoment und der axialen Position des Rotors (28) ausbildet.

5. RCCVT nach einem der vorhergehenden Ansprüche, bei dem die Abgangstransmission (20) eine Antriebsradeinheit (910), ein mit der Antriebsradeinheit (910) kämmendes Einwegkupplungszahnrad (924) und eine Mehrzahl von Rollen (954) und zugeordneten Sätteln (956) zum Vermitteln von Rotationsantrieb an das Einwegkupplungszahnrad (924) umfasst, bei dem für jede Rolle und zugeordneten Sattel die Rolle (954) eine Außenfläche aufweist, die planmäßig einen ersten Kreisbogen (954.1), einen gegenüberliegenden zweiten Kreisbogen (954.2), eine planare Fläche (954.3), die ein Ende des ersten Kreisbogens mit einem Ende des zweiten Kreisbogens verbindet, und eine Verbindungsfläche zwischen einem zweiten Ende des ersten Kreisbogens und einem zweiten Ende des zweiten Kreisbogens umfasst, wobei die Verbindungsfläche eine Freilauffläche (920) angrenzend an das zweite Ende des zweiten Kreisbogens, die entgegen der Wölbung des zweiten Kreisbogens gewölbt ist, eine Spitze (968) und einen Hohlraum (954.4) zwischen der Spitze (968) und dem zweiten Ende des ersten Kreisbogens, und wobei der Sattel (956) planmäßig eine Innenfläche (960) mit dem gleichen Radius wie der Radius der Außenfläche (168) der zugehörigen Kipphebeleinheit (14), eine Außenfläche (962), die zur Innenfläche (960) konzentrisch und mit dem gleichen Radius wie die Freilauffläche ausgebildet ist, und einen Endanschlag (964), der von der Außenfläche (962) abragt, wobei der Endanschlag eine Begrenzungsfläche (966) beinhaltet, und ein Beaufschlagungselement (999) umfasst, das zwischen der planaren Fläche (954.3) der Rolle und dem Einwegkupplungszahnrad (924) wirksam ist, und wobei in einer Freilaufstellung die Innenfläche (960) in Gleitkontakt mit der Außenfläche (168) steht und der Sattel (956) so positioniert ist, dass seine Begrenzungsfläche (966) an der Rollenspitze (968) anliegt und, in einer Sperrstellung, die Rollenspitze (968) von der Außenfläche (962) versetzt ist und mit der Begrenzungsfläche (966) in Kontakt steht.

6. RCCVT nach einem der vorhergehenden Ansprüche, das in Kombination mit einem Getriebe (22), das zwei Vorwärtsgänge und einen Rückwärtsgang umfasst, vorgesehen ist.

7. RCCVT nach einem der vorhergehenden Ansprüche, das eine axiale Sperreinrichtung (672, 674) aufweist, die so beaufschlagt ist, dass sie unter Drehmomenteinfluss entsperrt wird, und wobei das Entsperren gegebenenfalls von Hand veranlasst wird.

## Revendications

1. Transmission à variation continue commandée par rotor (RCCVT) qui comprend :
un arbre d'entrée (30) qui est monté à des fins de rotation autour d'un axe longitudinal (LA),
un rotor (28) qui est fixé à l'arbre d'entrée (30), qui peut tourner conjointement avec l'arbre d'entrée (30) et qui est mobile axialement par rapport à l'arbre d'entrée (30),
le rotor (28) comprenant une extrémité de rapport élevé (HR) présentant un rayon minimum, à partir de l'axe longitudinal (LA), de Rmin_H, une extrémité d'accouplement neutre (GN) présentant un rayon minimum, à partir de l'axe longitudinal (LA), de Rmin_gn, une surface extérieure (OS) entre l'extrémité de rapport élevé (HR) et l'extrémité d'accouplement neutre (GN), et un rayon minimum R de l'axe longitudinal (LA) à la surface extérieure (OS) entre l'extrémité de rapport élevé (HR) et l'extrémité d'accouplement neutre (GN),
une première unité formant suiveur de rotor (16A) comportant au moins un palier de suiveur de rotor (114A) comportant une première surface de contact (CS1) qui se trouve en contact linéaire avec ladite surface extérieure (OS),
une seconde unité formant suiveur de rotor (16B) comportant au moins un palier de suiveur de rotor (114B) comportant une seconde surface de contact (CS2) qui se trouve en contact linéaire avec ladite surface extérieure (OS),
une transmission de sortie (20),
une première unité formant culbuteur (14A) et une seconde unité formant culbuteur (14B) servant à transmettre respectivement une force d'entraînement en rotation des unités formant suiveurs de rotor (16A, 16B) à la transmission de sortie (20),
(i) le rayon minimum R augmentant de manière linéaire de Rmin_h à Rmin_gn sur la longueur du rotor (28) de l'extrémité de rapport élevé (HR) à l'extrémité d'accouplement neutre (GN), des forces produites par les première et seconde unités formant suiveurs de rotor (16A, 16B) sur le rotor (28) comprenant ainsi une composante résultante (Fa) sur le rotor (28), dans la direction de l'axe longitudinal (LA), qui est toujours dans la direction axiale (832) de l'extrémité de rapport élevé (HR) à l'extrémité d'accouplement neutre (GN), et
(ii) ladite première surface de contact (CS1) et ladite seconde surface de contact (CS2) restant respectivement en contact linéaire avec ladite surface extérieure (OS) du rotor (28),
**caractérisée par**
une première barre de torsion (200A) comportant une première extrémité (200A1) et une seconde extrémité (200A2) et une seconde extrémité (200A2), une seconde barre de torsion (200B) comportant une première extrémité (200B1) et une seconde extrémité (200B2), la première extrémité (200A1) de la première barre de torsion (200A) étant raccordée à la première unité formant culbuteur (14A), la première extrémité (200B1) de la seconde barre de torsion (200B) étant raccordée à la seconde unité formant culbuteur (14B), une unité formant tige-poussoir (230) raccordée à la seconde extrémité (200A2) de la première barre de torsion (200A) et à la seconde extrémité (200B2) de la seconde barre de torsion (200B), et une unité d'actionnement (228) qui, en réaction à la position axiale du rotor (28), provoque l'actionnement de l'unité formant tige-poussoir (230) de telle sorte que le couple requis sur les unités formant culbuteurs (14A, 14B) corresponde aux couples produits par les barres de torsion (200A, 200B).

2. RCCVT selon la revendication 1, dans laquelle :
i. un point médian dudit contact linéaire de ladite première surface de contact (CS1) avec ladite surface extérieure (OS) est B1,
ii. un point médian dudit contact linéaire de ladite surface de contact (CS2) avec ladite surface extérieure (OS) est B2,
iii. la première unité formant culbuteur (14A) comprend un galet (152A) qui peut tourner autour d'un axe RA1 et peut pivoter autour d'un axe RAU1 qui est espacé de l'axe RA1 d'une distance Ra, et la distance entre RAU1 et B1, dans la direction de l'axe longitudinal LA, est L2,
iv. la seconde unité formant culbuteur (14B) comprend un galet (152B) qui peut tourner autour d'un axe RA2 et peut pivoter autour d'un axe RAU2 qui est espacé de l'axe RA1 d'une distance Ra, et la distance entre RAU2 et B2, dans la direction de l'axe longitudinal LA, est L2,
v. l'espacement entre RAU1 et RAU2 est H et dans laquelle :
vi. L1, L2, Ra et H sont tels que des forces sur les unités formant suiveurs de rotor (16A, 16B) comprennent des résultantes Fx1, Fx2 respectives dans la direction de l'axe longitudinal (LA), qui sont toujours dans la direction axiale (832) de l'extrémité de rapport élevé (HR) à l'extrémité d'accouplement neutre (GN), les unités formant suiveurs de rotor (16A, 16B) étant ainsi continuellement sollicitées dans la direction axiale (832).

3. RCCVT selon la revendication 2, dans laquelle un déplacement radial des points médians B1 et B2 vis-à-vis de l'axe longitudinal (LA) est converti de manière linéaire en un déplacement angulaire des première et seconde unités formant culbuteurs (14A et 14B) autour des axes RAU1 et RAU2 respectifs.

4. RCCVT selon l'une quelconque des revendications 1 à 3, dans laquelle l'unité d'actionnement (228) établit une relation non linéaire entre le couple produit par les première et seconde barres de torsion (200A, 200B) et ladite position axiale du rotor (28).

5. RCCVT selon l'une quelconque des revendications précédentes, dans laquelle la transmission de sortie (20) comprend une unité formant roue dentée menante (910), une roue dentée d'embrayage à roue libre (924) engrenée avec l'unité formant roue dentée menante (910), et une pluralité de galets (954) et de supports (956) associés servant à imprimer une force d'entraînement en rotation à la roue dentée d'embrayage à roue libre (924), dans laquelle, pour chaque galet et chaque support associé, le galet (954) comporte une surface extérieure qui, en plan, comprend un premier arc de cercle (954.1), un second arc de cercle (954.2) opposé, une surface plane (954.3) qui raccorde une extrémité du premier arc de cercle à une extrémité du second arc de cercle, et une surface de raccordement entre une seconde extrémité du premier arc de cercle et une seconde extrémité du second arc de cercle, dans laquelle la surface de raccordement comprend une surface de roue libre (920) adjacente à la seconde extrémité du second arc de cercle qui est courbée dans un sens opposé à la courbure du second arc de cercle, une pointe (968), et une cavité (954.4) entre la pointe (968) et la seconde extrémité du premier arc de cercle, et dans laquelle le support (956), en plan, comporte une surface intérieure (960) qui présente un rayon identique au rayon de la surface extérieure (168) de l'unité formant culbuteur (14) respective, une surface extérieure (962) qui est concentrique vis-à-vis de la surface intérieure (960) et qui présente un rayon identique à celui de la surface de roue libre, et une butée (964) qui fait saillie à partir de la surface extérieure (962), la butée comprenant une surface de limitation (966) et un élément de sollicitation (999) qui agit entre la surface plane (954.3) du galet et la roue dentée d'embrayage à roue libre (924) et dans laquelle, dans une position de roue libre, la surface intérieure (960) se trouve en contact glissant avec la surface extérieure (168) et le support (956) est positionné de sorte que sa surface de limitation (966) se trouve contre la pointe (968) du galet et, dans une position bloquée, la pointe (968) du galet est décalée de la surface extérieure (962) et se trouve en contact avec la surface de limitation (966).

6. RCCVT selon l'une quelconque des revendications précédentes, fournie en combinaison avec une boîte de vitesses (22) qui comprend deux positions de marche avant et une position de marche arrière.

7. RCCVT selon l'une quelconque des revendications précédentes, qui comprend un dispositif de blocage axial (672, 674) qui est sollicité de façon à se débloquer sous l'effet d'un couple et dans laquelle le déblocage est déclenché manuellement le cas échéant.
